(19) Europäisches Patentamt / European Patent Office / Office européen des brevets

(11) **EP 4 535 732 A1**

(12) **EUROPEAN PATENT APPLICATION**
published in accordance with Art. 153(4) EPC

(43) Date of publication:
09.04.2025 Bulletin 2025/15

(21) Application number: 23826079.8

(22) Date of filing: 29.05.2023

(51) International Patent Classification (IPC):
*H04L 25/02* (2006.01)    *H04B 7/0408* (2017.01)

(52) Cooperative Patent Classification (CPC):
H04B 7/0408; H04L 5/00; H04L 25/02

(86) International application number:
PCT/CN2023/096803

(87) International publication number:
WO 2023/246430 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.06.2022 CN 202210739277

(71) Applicant: Huawei Technologies Co., Ltd.
Shenzhen, Guangdong 518129 (CN)

(72) Inventors:
• ZOU, Peng
  Shenzhen, Guangdong 518129 (CN)
• HE, Gaoning
  Shenzhen, Guangdong 518129 (CN)
• YANG, Ganghua
  Shenzhen, Guangdong 518129 (CN)

(74) Representative: Gill Jennings & Every LLP
The Broadgate Tower
20 Primrose Street
London EC2A 2ES (GB)

(54) **COMMUNICATION METHOD AND APPARATUS**

(57) This application provides a communication method and apparatus, and relates to the field of communication technologies. **In** the communication method, a first communication apparatus performs dimension reduction on a first matrix based on a location indicated by first location information, to obtain a second matrix, precodes a first reference signal by using the second matrix, to obtain a second reference signal, and sends the second reference signal. Because the second matrix is a dimension-reduced matrix, a dimension of the second reference signal can be reduced by using the second matrix, and therefore resource overheads for sending the second reference signal can be reduced.

FIG. 5

## Description

## CROSS-REFERENCE TO RELATED APPLICATIONS

This application claims priority to Chinese Patent Application No. 202210739277.0, filed with the China National Intellectual Property Administration on June 24, 2022 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

A terminal device sends a reference signal (for example, a channel sounding reference signal (sounding reference signal, SRS)) to a base station, where an expression of the reference signal is $\mathbf{X}$ = diag(ZC(M)), M is a quantity of antennas of the terminal device, and ZC represents a Zadoff-Chu (Zadoff-Chu) sequence. The base station performs channel estimation based on the received reference signal to obtain a channel matrix. A calculation formula for the reference signal $\mathbf{Y}$ received by the base station is $\mathbf{Y = HX + Z,}$ where $\mathbf{H} \in \mathbb{C}^{N \times M}, \mathbf{X} \in \mathbb{C}^{M \times M}$, and $\mathbf{Z} \in \mathbb{C}^{N \times M}$. $\mathbf{H}$ is a channel matrix, $\mathbf{Z}$ is a noise matrix or a noise signal, and N represents a quantity of antennas of the base station.

Currently, when calculating the channel matrix, the base station right-multiplies the calculation formula for the reference signal $\mathbf{Y}$ by an inverse matrix of $\mathbf{X,}$ to obtain an equivalent result $\tilde{\mathbf{H}}$ of the channel matrix, where $\tilde{\mathbf{H}} = \mathbf{YX^{-}}$, and $\mathbf{X^{-}}$ represents the inverse matrix of $\mathbf{X}$. In this channel estimation manner, $\mathbf{X}$ is required to be a full-rank matrix to right-multiply the calculation formula for $\mathbf{Y}$ by the inverse matrix of $\mathbf{X}$. However, if $\mathbf{X}$ is a full-rank matrix, correspondingly, the terminal device needs to send the reference signal $\mathbf{X}$ on M resources. In other words, resource overheads for sending the reference signal by the terminal device are relatively large.

## SUMMARY

Embodiments of this application provide a communication method and apparatus, to reduce resource overheads for sending a reference signal.

According to a first aspect, an embodiment of this application provides a communication method, and the method may be performed by a first communication apparatus. The first communication apparatus is, for example, a terminal device, a software module in a terminal device, a chip system, or a software module in a chip system. The communication method includes: obtaining first location information and information about a first reference signal, where the first location information indicates a location at which dimension reduction is to be performed on a first matrix; and sending a second reference signal, where the second reference signal is obtained by precoding the first reference signal based on a second matrix, and the second matrix is obtained by performing dimension reduction processing on the first matrix based on the first location information. The first matrix may be a transformation matrix used to transform a signal sent by the first communication apparatus from a spatial domain to a wavenumber domain.

In this embodiment of this application, after obtaining the information about the first reference signal, the first communication apparatus precodes the first reference signal based on the second matrix to obtain the second reference signal, and sends the second reference signal. The second matrix is obtained by performing dimension reduction on the first matrix based on the first location information. This is equivalent to that a dimension of the second reference signal is controlled by using the second matrix, which helps reduce resource overheads for sending the second reference signal by the first communication apparatus. It should be noted that a specific form of the signal in this embodiment of this application may be a matrix. Therefore, a dimension of the signal may be understood as a row and/or a column of a matrix corresponding to the signal. In addition, because the dimension of the second reference signal is smaller, it is helpful to reduce a calculation amount of channel estimation performed by an apparatus that subsequently receives the second reference signal. Moreover, the first matrix is the transformation matrix used to transform a signal sent (or transmitted) by the first communication apparatus from the spatial domain to the wavenumber domain, and a specific situation of the sent signal is usually related to a quantity of antennas of the first communication apparatus, that is, a dimension of the first matrix is related to the quantity of antennas of the first communication apparatus. Therefore, a quantity of rows and/or a quantity of columns of the second matrix obtained by performing dimension reduction on the first matrix may be less than the quantity of antennas of the first communication apparatus. Correspondingly, a quantity of rows and/or a quantity of columns of the second reference signal are/is less than the quantity of antennas of the first communication apparatus. Therefore, compared with a current channel estimation manner, the solution in this embodiment of this application can reduce the dimension of the sent second reference signal, thereby reducing resource overheads for sending the second reference signal.

For example, a quantity of rows of the first matrix is the quantity of antennas of the first communication apparatus, dimension reduction is performed on a row dimension of the first matrix, and a quantity of rows of the second matrix obtained through dimension reduction is also less than the quantity of antennas of the first communication apparatus. Therefore, the quantity of rows of the second reference signal obtained by precoding the first reference signal based on the second matrix is also less than the quantity of antennas of the first communication apparatus. In this way, a quantity of resources required for sending the second reference signal is less than the quantity of antennas of the first communication apparatus, thereby reducing resource overheads for sending a reference signal.

In a possible implementation, the first location information includes a row number of at least one row and/or a column number of at least one column that are/is to be dimensionally reduced from the first matrix.

In this implementation, the first location information may directly indicate a row number and/or a column number of the first matrix, so that after receiving the first location information, the first communication apparatus can directly delete a row corresponding to the row number in the first matrix, and/or delete a column corresponding to the column number in the first matrix, thereby helping simplify a process in which the first communication apparatus performs dimension reduction on the first matrix.

In a possible implementation, the first location information includes an index of a dimension reduction location of the first matrix, and the index is used to indicate a row number of at least one row and/or a column number of at least one column that are/is to be dimensionally reduced from the first matrix.

In this implementation, the first location information may indicate the index of the dimension reduction location of the first matrix, thereby helping reduce a quantity of bits occupied by the first location information.

It should be noted that the foregoing two designs are examples of a specific manner in which the first location information indicates the location at which dimension reduction is to be performed on the first matrix. Actually, the first location information may alternatively indicate, in another manner, the location at which dimension reduction is to be performed on the first matrix. This is not specifically limited in this embodiment of this application.

In a possible design, before the obtaining first location information and information about a first reference signal, the method further includes: sending a third reference signal, where the third reference signal is used to determine the first location information.

In this implementation, the first communication apparatus may send the third reference signal to another communication apparatus (for example, a second communication apparatus), so that the second communication apparatus can determine the first location information based on the third reference signal. The third reference signal reflects a status of a channel between the first communication apparatus and the second communication apparatus to some extent. Therefore, this helps the second communication apparatus determine more proper first location information.

In a possible implementation, the method further includes: determining the first matrix based on geographical location information and antenna arrangement information of the first communication apparatus, where the geographical location information is used to indicate a geographical location of the first communication apparatus.

In this implementation, a manner in which the first communication apparatus determines the first matrix by itself is provided. A manner in which the first communication apparatus obtains the geographical location information and the antenna arrangement information is relatively simple, and therefore, this helps simplify a process in which the first communication apparatus determines the first matrix.

In a possible implementation, the determining the first matrix based on geographical location information and antenna arrangement information of the first communication apparatus includes: determining a third matrix and a fourth matrix based on the geographical location information and the antenna arrangement information of the first communication apparatus, where the third matrix is used to represent a base of a signal that is sent by the first communication apparatus and that is transformed from the spatial domain to the wavenumber domain, and the fourth matrix is used to represent impact of an antenna of the first communication apparatus on the wavenumber domain; and determining the first matrix based on the third matrix and the fourth matrix.

In this implementation, the first matrix is determined by using the third matrix and the fourth matrix, and a specific manner of determining the first matrix is provided.

In a possible implementation, the method further includes: receiving the geographical location information.

In this implementation, the first communication apparatus may receive the geographical location information from another communication apparatus, and the first communication apparatus does not need to determine the geographical location information by itself, thereby reducing a processing amount of the first communication apparatus.

In a possible implementation, the second reference signal is a product result of a pseudo-inverse matrix of the second matrix and the first reference signal.

It should be noted that, if the second matrix is a full-rank matrix, the pseudo-inverse matrix of the second matrix is an inverse matrix of the second matrix.

In this implementation, a specific manner of determining the second reference signal is provided.

In a possible implementation, the method further includes: sending antenna size information of the first communication apparatus.

In this implementation, the first communication apparatus may send the antenna size information to another communication apparatus (for example, the second communication apparatus), so that the second communication apparatus can obtain more information about the first communication apparatus, thereby helping the second communication apparatus determine more accurate second location information.

In a possible implementation, a quantity of rows of the second matrix is less than a quantity of antennas of the first communication apparatus, and/or a quantity of columns of the second matrix is less than the quantity of antennas of the first communication apparatus.

In this implementation, the first communication apparatus may determine that the quantity of rows and/or the quantity of columns of the second matrix is less than the quantity of antennas of the first communication apparatus. This ensures that a quantity of rows and/or a quantity of columns of the second reference signal is also less than the quantity of antennas of the first communication apparatus, thereby helping reduce resource overheads for sending the second reference signal.

According to a second aspect, an embodiment of this application provides a communication method, and the method may be performed by a second communication apparatus. The second communication apparatus is, for example, a network device, a software module in a network device, a terminal device, a software module in a terminal device, a chip system, or a software module in a chip system. The method includes: sending first location information and information about a first reference signal to a first communication apparatus, where the first location information indicates a location at which dimension reduction is to be performed on a first matrix, and the first matrix is a transformation matrix used to transform a signal sent by the first communication apparatus from a spatial domain to a wavenumber domain; and receiving a fourth reference signal from the first communication apparatus.

In a possible implementation, the first location information is used to perform dimension reduction processing on the first matrix to obtain a second matrix, and the second matrix is used to perform precoding processing on the first reference signal to obtain a second reference signal.

In a possible implementation, the fourth reference signal is a signal formed after the second reference signal is transmitted through a channel.

In a possible implementation, the first location information includes a row number of at least one row and/or a column number of at least one column that are/is to be dimensionally reduced from the first matrix.

In a possible implementation, the first location information includes an index of a dimension reduction location of the first matrix, and the index is used to indicate a row number of at least one row and/or a column number of at least one column that are/is to be dimensionally reduced from the first matrix.

In a possible implementation, the method further includes: determining that a quantity of rows of the second matrix is less than a quantity of antennas of the first communication apparatus, and/or a quantity of columns of the second matrix is less than the quantity of antennas of the first communication apparatus, where the second matrix is a matrix obtained after dimension reduction processing is performed on the first matrix based on the first location information.

In a possible implementation, before the sending first location information and information about a first reference signal, the method further includes: receiving a third reference signal from the first communication apparatus, where the third reference signal is used to determine the first location.

In a possible implementation, the method further includes: determining cluster information and geographical location information based on the third reference signal, where the cluster information is used to indicate a location of an element that is greater than or equal to a first threshold in a fifth matrix, the fifth matrix is used to indicate distribution of power that is of a signal sent by the first communication apparatus and that is in different directions, and the geographical location information is used to indicate a geographical location of the first communication apparatus; determining second location information based on the cluster information of the first communication apparatus and the geographical location information, where the second location information is used to indicate a location of an element that is less than or equal to the first threshold in the fifth matrix; and determining the first location information based on the second location information.

In this implementation, a specific manner in which the second communication apparatus determines the first location information is provided. In this implementation, the second communication apparatus may determine, by using the third reference signal from the first communication apparatus, the power distribution (that is, the cluster information) of the signal sent (or sent) by the first communication apparatus and the geographical location information of the first communication apparatus. In this way, the second communication apparatus may delete information (equivalent to the second location information) about a location of relatively low power distributed in the fifth matrix, which is equivalent to reserving effective information in the fifth matrix. In addition, determining the first location information based on the second location information, so that after dimension reduction is performed on the first matrix based on the first location information, a dimension of the first matrix can be reduced without excessively losing effective information in the first matrix, thereby ensuring that the second reference signal can reserve more effective information, and improving accuracy of subsequent channel estimation.

In a possible implementation, the determining cluster information and geographical location information based on the third reference signal includes: processing the third reference signal by using a machine learning model, to obtain the cluster information and the geographical location information.

In this implementation, the second communication apparatus may process the third reference signal by using the machine learning model, to obtain the cluster information and the geographical location information. Processing efficiency of the machine learning model is relatively high, so that efficiency of determining the cluster information and the geographical location information by the second communication apparatus can be improved.

In a possible implementation, the method further includes: sending the geographical location information to the first communication apparatus, where the geographical location information is used to determine the first matrix.

In a possible implementation, the method further includes: receiving antenna size information from the first communication apparatus.

According to a third aspect, an embodiment of this application provides a communication apparatus. The communication apparatus may be the first communication apparatus in the first aspect, or a software module configured in the first communication apparatus, or an electronic device (for example, a chip system) that can implement a function of the first communication apparatus, or a relatively large device including the first communication apparatus. The communication apparatus includes a corresponding means (means) or module configured to perform the first aspect or any optional implementation. For example, the communication apparatus includes a receiving module (also referred to as a receiving unit sometimes) and a sending module (also referred to as a sending unit sometimes).

For example, the receiving module is configured to obtain first location information and information about a first reference signal, where the first location information indicates a location at which dimension reduction is to be performed on a first matrix, and the first matrix is a transformation matrix used to transform a signal sent by a first communication apparatus from a spatial domain to a wavenumber domain; and the sending module is configured to send a second reference signal, where the second reference signal is obtained by precoding the first reference signal based on a second matrix, and the second matrix is obtained by performing dimension reduction processing on the first matrix based on the first location information.

In a possible implementation, the communication apparatus further includes a processing module (also referred to as a processing unit sometimes). For example, the processing unit is configured to determine the first matrix based on geographical location information and antenna arrangement information of the first communication apparatus, where the geographical location information is used to indicate a geographical location of the first communication apparatus.

In an optional implementation, the communication apparatus includes a storage module. The processing module can be coupled to the storage module, and execute a program or instructions in the storage module, to enable the communication apparatus to perform a function of the first communication apparatus.

According to a fourth aspect, an embodiment of this application provides a communication apparatus. The communication apparatus may be the second communication apparatus in the second aspect, or a software module configured in the second communication apparatus, or an electronic device (for example, a chip system) that can implement a function of the second communication apparatus, or a relatively large device including the second communication apparatus. The communication apparatus includes a corresponding means (means) or module configured to perform the first aspect or any optional implementation. For example, the communication apparatus includes a receiving module (also referred to as a receiving unit sometimes) and a sending module (also referred to as a sending unit sometimes).

For example, the sending module is configured to send first location information and information about a first reference signal to a first communication apparatus, where the first location information indicates a location at which dimension reduction is to be performed on a first matrix, and the first matrix is a transformation matrix used to transform a signal sent by the first communication apparatus from a spatial domain to a wavenumber domain; and the receiving module is configured to receive a fourth reference signal from the first communication apparatus.

In a possible implementation, the communication apparatus further includes a processing module (also referred to as a processing unit sometimes). For example, the processing unit is configured to determine that a quantity of rows of the second matrix is greater than a quantity of antennas of the first communication apparatus.

In an optional implementation, the communication apparatus includes a storage module. The processing module can be coupled to the storage module, and execute a program or instructions in the storage module, to enable the communication apparatus to perform a function of the second communication apparatus.

According to a fifth aspect, an embodiment of this application provides a communication system, including the communication apparatus in the third aspect and the communication apparatus in the fourth aspect.

According to a sixth aspect, an embodiment of this application provides a communication apparatus, including a processor and a communication interface. The communication interface is configured to receive a signal from an apparatus other than the communication apparatus and transmit the signal to the processor, or send a signal from the processor to an apparatus other than the communication apparatus. The processor executes code instructions by using a logic circuit to implement the method according to any one of the first aspect or the second aspect.

Optionally, the communication apparatus further includes another component, for example, an antenna and an input/output module. These components may be hardware, software, or a combination of software and hardware.

According to a seventh aspect, an embodiment of this application provides a chip system. The chip system includes a processor and an interface. The processor is configured to invoke instructions from the interface and run the instructions, and when the processor executes the instructions, the method according to any one of the first aspect or the second aspect is implemented.

According to an eighth aspect, a computer-readable storage medium is provided. The computer-readable storage medium is configured to store a computer program or instructions. When the computer program or instructions are run, the method according to any one of the first aspect or the second aspect is implemented.

According to a ninth aspect, a computer program product including instructions is provided. When the computer program product runs on a computer, the method according to any one of the first aspect or the second aspect is implemented.

For beneficial effects of the second aspect to the ninth aspect, refer to the beneficial effects described in the first aspect. Details are not listed herein again.

## BRIEF DESCRIPTION OF DRAWINGS

FIG. 1 is a diagram of a process in which a sending device sends a signal to a receiving device;
FIG. 2 is a diagram of a wavenumber matrix of a sending device;
FIG. 3 is a diagram of a structure of a resource occupied by a reference signal;
FIG. 4 is a diagram of an application scenario to which an embodiment of this application is applicable;
FIG. 5 is a schematic flowchart of a communication method according to an embodiment of this application;
FIG. 6 is a diagram of an antenna structure of a first communication apparatus according to an embodiment of this application;
FIG. 7 is a diagram of a process of performing dimension reduction processing on a first matrix according to an embodiment of this application;
FIG. 8 is a diagram of another process of performing dimension reduction processing on a first matrix according to an embodiment of this application;
FIG. 9 is a diagram of a structure of a resource occupied by a reference signal according to an embodiment of this application;
FIG. 10 is a schematic flowchart of another communication method according to an embodiment of this application;
FIG. 11 is a diagram of a process of using a machine learning model according to an embodiment of this application;
FIG. 12 is a diagram of a process of training a machine learning model according to an embodiment of this application;
FIG. 13 is a diagram of pruning a fifth matrix according to an embodiment of this application;
FIG. 14 is a first diagram of location distribution of a first communication apparatus, a second communication apparatus, and a scatterer according to an embodiment of this application;
FIG. 15 is a diagram of a fifth matrix according to an embodiment of this application;
FIG. 16 is a diagram of a wavenumber matrix of a second communication apparatus according to an embodiment of this application;
FIG. 17 is a diagram of a composite matrix before pruning according to an embodiment of this application;
FIG. 18 is a diagram of a composite matrix obtained after pruning in a pruning manner 1 according to an embodiment of this application;
FIG. 19 is a diagram of a composite matrix obtained after pruning in a pruning manner 2 according to an embodiment of this application;
FIG. 20 is a diagram of a composite matrix obtained after pruning in a pruning manner 3 according to an embodiment of this application;
FIG. 21 is a diagram of another antenna structure of a first communication apparatus according to an embodiment of this application;
FIG. 22 is a second diagram of location distribution of a first communication apparatus, a second communication apparatus, and a scatterer according to an embodiment of this application;
FIG. 23 is another diagram of a fifth matrix according to an embodiment of this application;
FIG. 24 is another diagram of a wavenumber matrix of a second communication apparatus according to an embodiment of this application;
FIG. 25 is another diagram of a composite matrix before pruning according to an embodiment of this application;
FIG. 26 is another diagram of a composite matrix obtained after pruning in a pruning manner 2 according to an embodiment of this application;

FIG. 27 is another diagram of a composite matrix obtained after pruning in a pruning manner 3 according to an embodiment of this application;

FIG. 28 is a diagram of still another antenna structure of a first communication apparatus according to an embodiment of this application;

FIG. 29 is a third diagram of location distribution of a first communication apparatus, a second communication apparatus, and a scatterer according to an embodiment of this application;

FIG. 30 is still another diagram of a fifth matrix according to an embodiment of this application;

FIG. 31 is still another diagram of a wavenumber matrix of a second communication apparatus according to an embodiment of this application;

FIG. 32 is still another diagram of a composite matrix before pruning according to an embodiment of this application;

FIG. 33 is another diagram of a composite matrix obtained after pruning in a pruning manner 1 according to an embodiment of this application;

FIG. 34 is still another diagram of a composite matrix obtained after pruning in a pruning manner 2 according to an embodiment of this application;

FIG. 35 is still another diagram of a composite matrix obtained after pruning in a pruning manner 3 according to an embodiment of this application; and

FIG. 36 and FIG. 37 are diagrams of structures of two communication apparatuses according to an embodiment of this application.

## DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

1. A Fourier plane wave (fourier plane wave, FPW) model is used to describe a channel between a sending device (which may also be referred to as a transmit end or a transmit end) and a receiving device (which may also be referred to as a receive end). A basic theory of the FPW model is a basic principle and information theory of an electromagnetic field. A core idea of the FPW model is to represent, by using a Fourier plane wave, power (or energy) of a radio wave propagated in different directions.

In a single-input single-output (single-input single-output, SISO) communication scenario, an expression of the FPW model is shown in the following formula (1):

$$h(r,s)= \sum_{(l_x,l_y)\in\varepsilon_r} \sum_{(m_x,m_y)\in\varepsilon_s} a_r(l_x,l_y,r)H_a(l_x,l_y,m_x,m_y) a_s(m_x,m_y,s) \qquad (1)$$

where $h(r,s)$ may represent a channel matrix in the SISO communication scenario; $r$ represents an orientation vector of the receiving device in a global coordinate system (global coordinate system, GCS); $s$ represents an orientation vector of the sending device in the GCS; $a_r(l_x,l_y,r)$ is a plane wave basis of the receiving device, and $l_x$ and $l_y$ are respectively orientations of the receiving device on an X-axis and a Y-axis in a wavenumber matrix; $a_s(m_x,m_y,s)$ is a plane wave basis of the sending device, and $m_x$ and $m_y$ are respectively orientations of the sending device on an X-axis and a Y-axis in a wavenumber matrix; and $H_a(l_x,l_y,m_x,m_y)$ is a composite matrix of the wavenumber matrix of the sending device and the wavenumber matrix of the receiving device.

In a multi-input multi-output (multi-input multi-output, MIMO) communication scenario, an expression of the FPW model is shown in the following formula (2).

$$H=\Phi_r e^{j\Gamma_r} P e^{-j\Gamma_s} \Phi_s^H = APB \qquad (2)$$

$H$ represents a channel matrix in the MIMO communication scenario, $\Phi_r$ represents a plane wave matrix of the receiving device, $\Gamma_r$ represents a migration matrix of the receiving device, $\Phi_s$ represents a plane wave matrix of the sending device, $\Gamma_s$ represents a migration matrix of the sending device, and $P$ represents a composite matrix of a wavenumber matrix of the receiving device and a wavenumber matrix of the sending device. $A=\Phi_r e^{j\Gamma_r}$, where $A$ represents a transformation matrix of the receiving device; and $B=e^{-j\Gamma_s}\Phi_s^H$, where $B$ represents a transformation matrix of the

sending device. $\Phi_r \in N_r \times n_r$, $\Gamma_r \in n_r \times n_r$, $P \in n_r \times n_s$, $\Phi_s \in N_s \times n_s$, and $\Gamma_s \in n_s \times n_s$. $N_r$ is a quantity of antennas of the receiving device, $N_s$ is a quantity of antennas of the sending device, $n_r$ is a dimension of the wavenumber matrix of the receiving device, and $n_s$ is a dimension of the wavenumber matrix of the sending device.

The following describes examples of calculation manners of $\Phi_r$, $\Gamma_s$, $\Phi_s$, $\Gamma_r$, and $P$ that are used.

$$\Phi_r\left(l_x, l_y, r_x, r_y\right) = exp\left(2\pi i\left(\frac{l_x r_x}{L_{Rx}} + \frac{l_y r_y}{L_{Ry}}\right)\right) \tag{3}$$

$$\left\{\left(l_x, l_y\right) \in \mathbb{Z}^2 : \left(\frac{l_x \lambda}{L_{Rx}}\right)^2 + \left(\frac{l_y \lambda}{L_{Ry}}\right)^2 \leq 1\right\}, \left\{\left(r_x, r_y\right) \in \mathbb{Z}^2\right\} \tag{4}$$

$$\Gamma_r\left(l_x, l_y, r_z\right) = exp\left(i\left(r_z\sqrt{\left(\frac{2\pi}{\lambda}\right)^2 - \left(\frac{2\pi l_x}{L_{Rx}}\right)^2 - \left(\frac{2\pi l_y}{L_{Ry}}\right)^2}\right)\right) \tag{5}$$

$$\left\{\left(l_x, l_y\right) \in \mathbb{Z}^2 : \left(\frac{l_x \lambda}{L_{Rx}}\right)^2 + \left(\frac{l_y \lambda}{L_{Ry}}\right)^2 \leq 1\right\}, \left\{\left(r_x, r_y\right) \in \mathbb{Z}^2\right\} \tag{6}$$

$$\Gamma_s\left(m_x, m_y, s_z\right) = exp\left(i\left(s_z\sqrt{\left(\frac{2\pi}{\lambda}\right)^2 - \left(\frac{2\pi m_x}{L_{Sx}}\right)^2 - \left(\frac{2\pi m_y}{L_{Sy}}\right)^2}\right)\right) \tag{7}$$

$$\left\{\left(l_x, l_y\right) \in Z^2 : \left(\frac{l_x \lambda}{L_{Rx}}\right)^2 + \left(\frac{l_y \lambda}{L_{Ry}}\right)^2 \leq 1\right\}, \left\{\left(s_x, s_y\right) \in Z^2\right\} \tag{8}$$

$$\Phi_s\left(m_x, m_y, s_x, s_y\right) = exp\left(2\pi i\left(\frac{m_x s_x}{L_{Sx}} + \frac{m_y s_y}{L_{Sy}}\right)\right) \tag{9}$$

$$\left\{\left(m_x, m_y\right) \in Z^2 : \left(\frac{m_x \lambda}{L_{Sx}}\right)^2 + \left(\frac{m_y \lambda}{L_{Sy}}\right)^2 \leq 1\right\}, \left\{\left(s_x, s_y\right) \in Z^2\right\} \tag{10}$$

$$P = vec(H_{a,Rx}) \times (vec(H_{a,Sx}))' \tag{11}$$

$H_{a,Rx}$ represents the wavenumber matrix of the receiving device, $H_{a,Sx}$ represents the wavenumber matrix of the sending device, $vec(F)$ represents column vectorization of $F$, $(vec(F))'$ represents row vectorization of $F$, $r_x$ represents a coordinate of the receiving device on an X-axis in the GCS, $r_y$ represents a coordinate of the sending device on a Y-axis in the GCS, $s_x$ and $s_y$ are coordinates of the sending device on the X-axis and the Y-axis in the GCS, and i represents an imaginary unit. $L_{Sx}$ represents an antenna size of the sending device in an X-axis direction, $L_{Sy}$ represents an antenna size of the sending device in a Y-axis direction, $L_{Rx}$ represents an antenna size of the receiving device in the X-axis direction, $L_{Ry}$ represents an antenna size of the receiving device in the Y-axis direction, $l_x$ represents absolute resolution of an aperture of an antenna of the receiving device on the X-axis, $l_y$ represents absolute resolution of the aperture of the antenna of the receiving device on the Y-axis, and $\mathbb{Z}^2$ represents a wavenumber domain.

Optionally, the wavenumber matrix of the sending device and the wavenumber matrix of the receiving device may be obtained through measurement.

2. A spatial domain may reflect an amplitude and a phase of a signal (for example, a signal in a form of an electromagnetic wave) that is propagated in a GCS. In the spatial domain, one antenna pair may be represented by using one complex number, and one antenna pair includes one antenna of a sending device and one antenna of a receiving device.

3. A wavenumber domain (wavenumber domain) may be understood as a spatial frequency domain of a wave, and the wavenumber domain may reflect an arrangement direction of power (or energy) of a signal. A wavenumber (also referred to as a wave number or repeatability) is a spatial frequency of a wave. The wavenumber is defined as a quantity of wave periodicities (temporal frequency) per unit time or a radian (angular frequency) per unit time. A formula for calculating the wavenumber is $2\pi/\lambda$, where $\lambda$ is a wavelength.

4. A scatterer may be understood as a medium in a channel through which a signal (for example, a signal in a form of an electromagnetic wave) passes from a transmit end to a receive end. The scatterer may be an object of any type, such as a wall and a tree. It should be noted that, the scatterer may cause a change in a propagation path of the signal, and may cause energy attenuation of the signal. A main scatterer may be understood as a scatterer that has a relatively great impact on energy and the propagation path of the signal.

5. A wavenumber matrix is used to represent distribution of power (or energy) of a signal in different directions. In other words, each element in the wavenumber matrix is actually power of a signal sent by a sending device. In addition to reflecting distribution of power (or energy) of a signal in different directions, the wavenumber matrix can also reflect sparseness of the power distribution of the signal. An element in the wavenumber matrix is power of a signal sent by the sending device, and a location of the element reflects absolute resolution of an aperture of an antenna of the sending device and a location of the sending device.

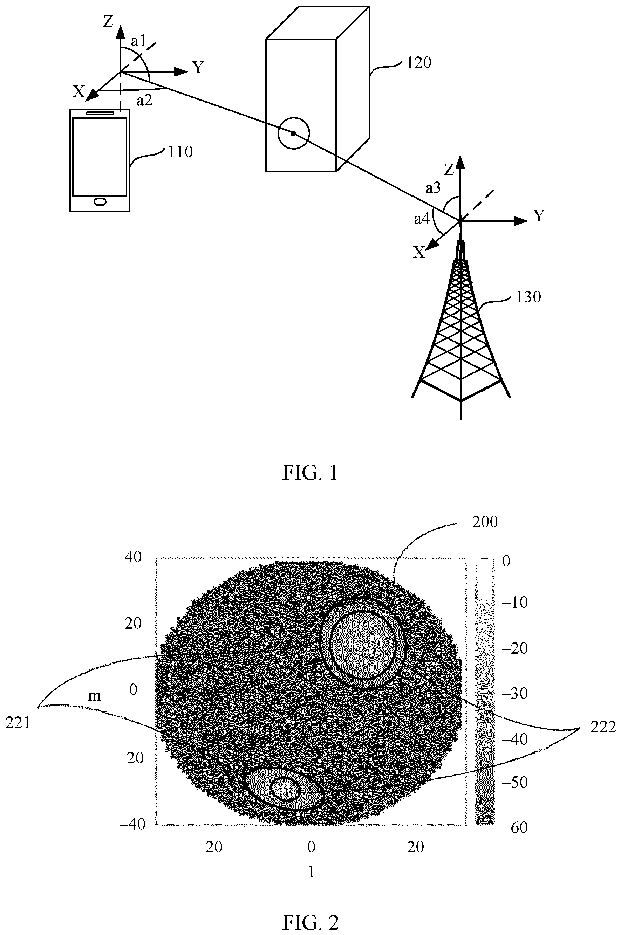

FIG. 1 is a diagram of a process in which a sending device sends a signal to a receiving device. As shown in FIG. 1, a sending device 110 sends a signal to a receiving device 130 at an azimuth a1 and a pitch angle a2. After the signal passes through a scatterer 120, the receiving device 130 receives the signal at an azimuth a3 and a pitch angle a4.

FIG. 2 is a diagram of a wavenumber matrix of a sending device. In FIG. 2, a horizontal coordinate of the wavenumber matrix represents absolute resolution of an aperture of an antenna of the sending device, and a vertical coordinate represents a location of the sending device. As shown in FIG. 2, power that is of a signal sent by the sending device and that is distributed in a first area 200 is not 0. Power of power distributed in a second area 221 in the first area 200 is greater than or equal to a second threshold, and power distributed in a third area 222 in the second area 221 is greater than or equal to a first threshold. The first threshold is greater than the second threshold. It can be learned from FIG. 2 that, locations corresponding to the third area 222 correspond to an azimuth a1 and a pitch angle a2 of the signal sent by the sending device. In addition, it can be further learned that, the power that is of the signal and that is distributed in the second area 221 is relatively large, and power that is of the signal and that is distributed in other areas is relatively small, that is, power distribution of the signal is characterized by sparseness.

The wavenumber matrix may be a wavenumber matrix of a sending device or a wavenumber matrix of a receiving device. A fifth matrix in embodiments of this application is specifically the wavenumber matrix of the sending device (for example, a first communication apparatus).

6. A transformation matrix is used to transform a signal from a spatial domain to a wavenumber domain.

The transformation matrix may be a transformation matrix of a sending device or a transformation matrix of a receiving device. A first matrix in embodiments of this application may be considered as the transformation matrix of the sending device (for example, a first communication apparatus).

7. A plane wave matrix is a base of a signal transformed from a spatial domain to a wavenumber domain.

The plane wave matrix may be a plane wave matrix of a sending device or a plane wave matrix of a receiving device. A third matrix in embodiments of this application may be considered as the plane wave matrix of the sending device (for example, a first communication apparatus).

8. A migration matrix reflects impact of an antenna on a wavenumber domain, and specifically reflects impact of a Z-axis coordinate of the antenna in a GCS on the wavenumber domain. Optionally, the migration matrix may be a diagonal matrix.

The migration matrix may be a migration matrix of a sending device or a migration matrix of a receiving device. A fourth matrix in embodiments of this application may be considered as the migration matrix of the sending device (for example, a first communication apparatus).

9. A dimension is a quantity of rows and/or a quantity of columns of a matrix. Reducing a dimension of a matrix may be reducing a quantity of rows of the matrix, reducing a quantity of columns of the matrix, or reducing the quantity of rows and the quantity of columns of the matrix.

10. A terminal device is a device having a wireless receiving/sending function, and may be a fixed device, a mobile device, a handheld device, a wearable device, a vehicle-mounted device, or a wireless apparatus (for example, a communication module or a chip system) built in the foregoing device. The terminal device is configured to connect a person, an object, a machine, and the like, and may be widely used in various scenarios, for example, the terminal device includes but is not limited to terminal devices in the following scenarios: cellular communication, device-to-device (device-to-device, D2D) communication, vehicle-to-everything (vehicle to everything, V2X), machine-to-machine/machine-type communication (machine-to-machine/machine-type communications, M2M/MTC), Internet of Things (Internet of Things, IoT), virtual reality (virtual reality, VR), augmented reality (augmented reality, AR), industrial control (industrial control), self driving (self driving), remote medical (remote medical), a smart grid (smart grid), smart furniture, smart office, smart wear, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like. For ease of description, an example in which the terminal device is a UE is used for description in embodiments of this application.

11. A network device includes, for example, an access network (access network, AN) device (which may also be referred to as an access network element) and/or a core network device (which may also be referred to as a core network element).

The access network device is a device having a wireless receiving/sending function, and is configured to communicate with the UE. The access network element includes but is not limited to a base station (BTS, Node B, eNodeB/eNB, or gNodeB/gNB) in the foregoing communication system, a transmission and reception point (t(R) ANsmission reception point, TRP), a subsequently evolved base station in 3GPP, and an access node, a wireless relay node, a wireless backhaul node, or the like in a wireless fidelity (wireless fidelity, WiFi) system. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission and reception points. The network device may alternatively be a radio controller, a central unit (centralized unit, CU), which may also be referred to as an aggregation unit, and/or a distributed unit (distributed unit, DU) in a cloud radio access network (cloud radio access network, C(R)AN) scenario. Alternatively, the network device may be an uncrewed aerial vehicle, a satellite, a terminal, a server, a wearable device, a vehicle-mounted device, or the like that undertakes a function of the network device in D2D communication and M2M communication. For example, a network device in the vehicle-to-everything (vehicle to everything, V2X) technology may be a road side unit (road side unit, RSU). An example in which the access network device is a base station is used below for description. A plurality of network devices in the communication system may be base stations of a same type, or may be base stations of different types. The base station may communicate with the UE, or may communicate with the UE by using a relay station. The UE may communicate with a plurality of base stations of different access technologies.

The core network element is configured to implement at least one of functions such as mobility management, data processing, session management, and policy and charging. Names of devices that implement a core network function in systems of different access technologies may be different. This is not limited in embodiments this application. Using a 5G system as an example, the core network element includes an access and mobility management function (access and mobility management function, AMF), a session management function (session management function, SMF), a PCF, a user plane function (user plane function, UPF), or the like.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, "A and/or B" may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Unless otherwise specified, ordinal numbers such as "first" and "second" in embodiments of this application are used to distinguish between a plurality of objects, and are not intended to limit an order, a time sequence, priorities, or importance of the plurality of objects. For example, a "first matrix" and a "second matrix" in embodiments of this application may be used to represent two matrices, but dimension sizes, types, and the like of the two matrices are not limited.

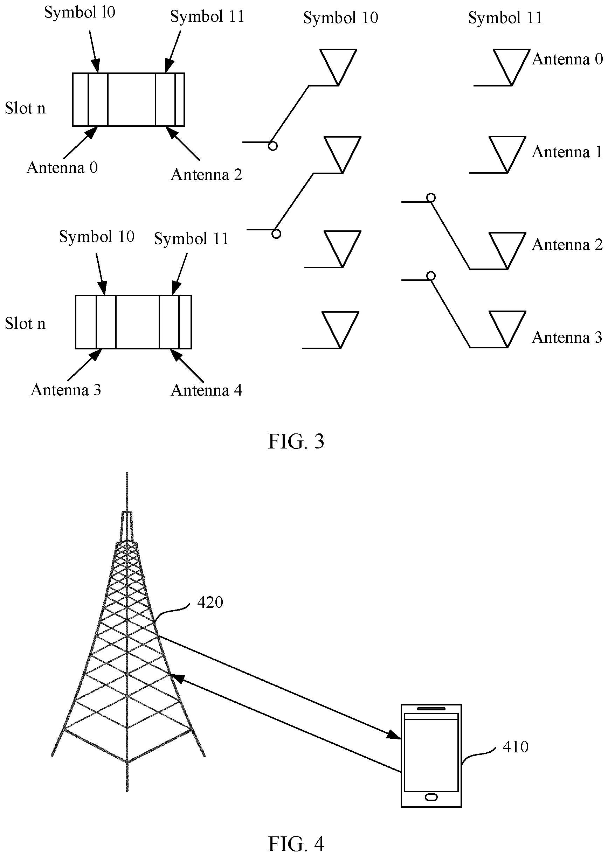

With reference to a diagram of a structure of a resource for sending a reference signal shown in FIG. 3, the following describes, by using an example, a resource that needs to be consumed for sending a reference signal in a current channel estimation manner.

FIG. 3 uses an example in which a terminal device includes four antennas: an antenna 0, an antenna 1, an antenna 2, and an antenna 3. As shown in FIG. 3, in the terminal device, the antenna 0 and the antenna 1 need to send a reference signal on a symbol $l_0$ in a slot n, and the antenna 2 and the antenna 3 need to send a reference signal on a symbol $l_1$ in the slot n. Therefore, the terminal device needs to consume four resources to send a reference signal, where one resource includes one symbol and one antenna. It should be noted that, if a line corresponding to an antenna in FIG. 3 is extended, it indicates that the antenna needs to send a reference signal on the symbol. For example, on the symbol $l_0$, lines corresponding to the antenna 0 and the antenna 1 both are longer than lines corresponding to the antenna 2 and the antenna 3, it indicates that the antenna 0 and the antenna 1 need to send a reference signal on the symbol $l_0$. For another

example, on the symbol $I_1$, lines corresponding to the antenna 2 and the antenna 3 both are longer than lines corresponding to the antenna 0 and the antenna 1, it indicates that the antenna 2 and the antenna 3 need to send a reference signal on the symbol $I_1$.

When resource overheads for sending a reference signal by the terminal device are excessively high, spectral efficiency of a communication system in which the terminal device is located may be affected. A formula for calculating the spectral efficiency may be shown in the following formula (12).

$$SE=(1-\alpha K)\times K\times log_2(1+SINR) \qquad\qquad (12)$$

SE represents the spectral efficiency, $\alpha$ is resource overheads for sending a reference signal, K is a quantity of users accessing the communication system, and SINR is a signal-to-interference ratio of the communication system.

As shown in the formula (12), when the resource overheads $\alpha$ for sending the reference signal are excessively high, the spectral efficiency *SE* of the communication system is reduced.

In view of this, embodiments of this application provide a communication method. In the method, a first communication apparatus may perform dimension reduction processing on a first matrix based on first location information, to obtain a second matrix, and precode a first reference signal based on the second matrix obtained through dimension reduction, to obtain a second reference signal. Because the first reference signal is precoded by using the second matrix, it is equivalent to that a dimension of the second reference signal is reduced by using the second matrix. Because the dimension of the second reference signal is reduced, resource overheads for sending the second reference signal by the first communication apparatus can be reduced, thereby helping improve spectral efficiency of a communication system in which the first communication apparatus is located.

The method in embodiments of this application is applicable to a communication scenario in which massive MIMO, an extremely large antenna array (extremely large antenna array, ELAA), a holographic MIMO antenna array (holographic MIMO antenna array, HMAA), or the like is used. In addition, the method in embodiments of this application may be applied to various communication systems, for example, a 5th generation (5th generation, 5G) communication system (for example, the method is specifically applicable to scenarios such as enhanced mobile broadband (enhanced mobile broadband, eMBB), ultra-reliable and low latency communication (ultra reliable low latency communication, URLLC), and enhanced machine type communication (enhanced evolved machine type communication, eMTC) in the 5G communication system), a beyond 5G (beyond 5G) communication system, a 6th generation (6th generation, 6G) communication system or another evolved system in the future, or various other wireless communication systems. The technical solutions in embodiments of this application can be used provided that channel estimation is used in the communication system. For example, the method in embodiments of this application is applicable to scenarios in which channel estimation and/or precoding may be used, such as backhaul, multi-station transmission (for example, a same UE simultaneously performs signal transmission with a plurality of transmission points), wireless to the x (wireless to the x, WTTx), enhanced mobile broadband (enhanced mobile broadband, eMBB), and device-to-device (device to device, D2D).

FIG. 4 is a diagram of an application scenario to which an embodiment of this application is applicable. Alternatively, FIG. 4 may be understood as a diagram of a structure of a communication system to which an embodiment of this application is applicable. As shown in FIG. 4, the scenario includes a first communication apparatus 410 and a second communication apparatus 420.

For example, the first communication apparatus 410 sends a reference signal to the second communication apparatus 420, and the second communication apparatus 420 may perform channel estimation on a channel between the first communication apparatus 410 and the second communication apparatus based on the received reference signal. In this case, the first communication apparatus 410 is also considered as a sending device, and the second communication apparatus 420 may be considered as a receiving device.

Optionally, the first communication apparatus 410 is a UE, the second communication apparatus 420 is a network device, and the second communication apparatus 420 is specifically, for example, a radio access network device. Alternatively, both the first communication apparatus 410 and the second communication apparatus 420 are UEs. Alternatively, the first communication apparatus 410 is a network device, and the second communication apparatus 420 is a UE.

It should be noted that, each of the first communication apparatus 410 and the second communication apparatus 420 may include one or more antennas. A type and an arrangement manner of the antennas of each of the first communication apparatus 410 and the second communication apparatus 420 may be arbitrary. This is not specifically limited in this embodiment of this application.

In an example, a quantity of antennas of the first communication apparatus 410 may be less than or equal to a quantity of antennas of the second communication apparatus 420.

The method provided in embodiments of this application is described below with reference to the accompanying drawings. In the accompanying drawings corresponding to embodiments of this application, steps represented by dashed lines are all optional steps. In addition, a first communication apparatus in embodiments of this application is, for example, the first communication apparatus 410 in FIG. 4, and a second communication apparatus is, for example, the second communication apparatus 420 shown in FIG. 4.

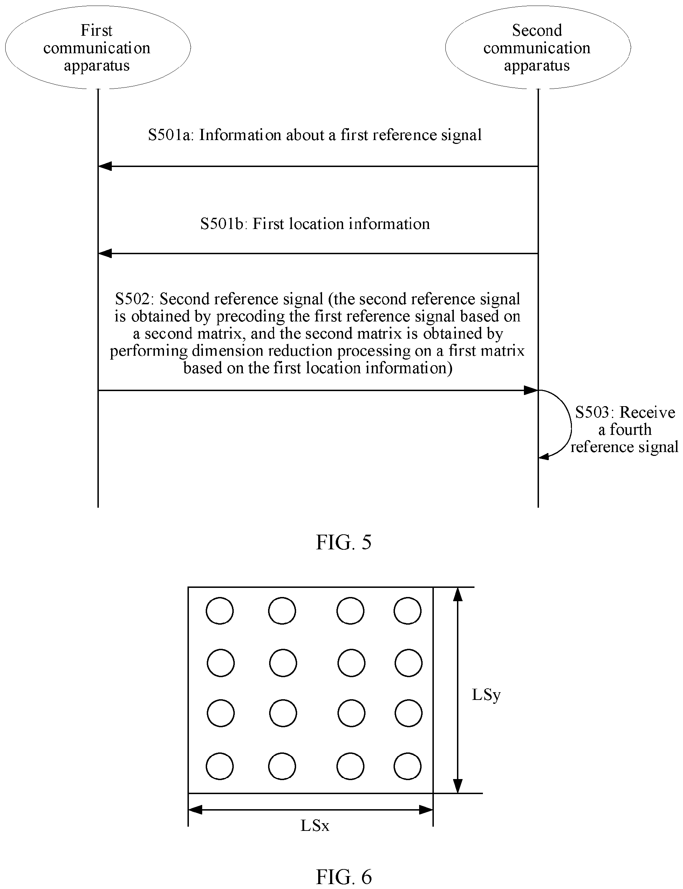

FIG. 5 is a schematic flowchart of a communication method according to an embodiment of this application.

S501: A first communication apparatus obtains information about a first reference signal and first location information.

The information about the first reference signal may be used to indicate one or more of a number, a time-frequency resource, a periodicity, a sequence type, and a sequence length that are of the first reference signal, and the first reference signal. The number of the first reference signal is used to indicate which one of a plurality of reference signals is the first reference signal.

The first reference signal may be an uplink reference signal or a downlink reference signal. The uplink reference signal is, for example, a channel sounding reference signal (sounding reference signal, SRS) or a demodulation reference signal (demodulatin reference signal, DMRS). The downlink reference signal is, for example, a channel state information-reference signal (channel state information - reference signal, CSI-RS). The first location information indicates a location at which dimension reduction is to be performed on a first matrix. Performing dimension reduction on the first matrix may be understood as reducing a quantity of rows of the first matrix and/or reducing a quantity of columns of the first matrix. The first location information may further indicate a quantity of locations at which dimension reduction is to be performed on the first matrix. For example, the quantity of locations is represented by a quantity of rows and/or a quantity of columns. For example, the first location information further indicates a quantity of rows and/or a quantity of columns that are to be dimensionally reduced from the first matrix. For a meaning of the first matrix, refer to the foregoing description.

There are a plurality of manners in which the first location information indicates the location at which dimension reduction is to be performed on the first matrix. Examples are described below.

Manner 1: The first location information explicitly indicates the location at which dimension reduction is to be performed on the first matrix.

For example, the first location information includes the location at which dimension reduction is to be performed on the first matrix. For example, the first location information includes a row number of at least one row and/or a column number of at least one column that are/is to be dimensionally reduced from the first matrix.

For example, the first location information may indicate a row number for performing dimension reduction on the first matrix. The first communication apparatus determines to delete a row corresponding to the row number in the first matrix, or the first communication apparatus determines to delete the row corresponding to the row number and a column corresponding to the row number in the first matrix. The column corresponding to the row number may be a column corresponding to a column number that has a first relationship with a value of the row number. For example, the first relationship is that the value of the row number is equal to a value of the column number, or the value of the row number plus a fixed value is equal to the value of the column number.

The first location information may indicate a column number for performing dimension reduction on the first matrix. The first communication apparatus determines to delete a column corresponding to the column number in the first matrix, or the first communication apparatus determines to delete the column corresponding to the column number and a row corresponding to the column number in the first matrix. The row corresponding to the column number may be a row corresponding to a row number that has a second relationship with a value of the column number. For example, the second relationship is that the value of the column number is equal to a value of the row number, or the value of the column number plus a fixed value is equal to the value of the row number.

For example, if the first location information indicates to delete an $i^{th}$ column in the first matrix, the first communication apparatus may determine to delete an $i^{th}$ row and the $i^{th}$ column in the first matrix, where i is a positive integer. For another example, if the first location information indicates to delete an $i^{th}$ row in the first matrix, the first communication apparatus may determine to delete the $i^{th}$ row and an $i^{th}$ column in the first matrix.

Specifically, for example, the first location information indicates to delete a third row and a fourth row in the first matrix, that is, indicates to delete the third row and the fourth row in the first matrix, and/or to delete a third column and a fourth column in the first matrix.

For another example, the first location includes an index of the location at which dimension reduction is to be performed on the first matrix, and the index indicates a row number of at least one row and/or a column number of at least one column that are/is to be dimensionally reduced from the first matrix. For example, if a value of the first location information is 100, the first communication apparatus determines that the location at which dimension reduction needs to be performed on the first matrix is a third row of the first matrix.

For example, the first location information may indicate an index (referred to as a first index herein for ease of differentiation) of a row number for performing dimension reduction on the first matrix. The first communication apparatus determines to delete a row corresponding to the first index in the first matrix, or the first communication apparatus determines to delete the row corresponding to the first index and a column corresponding to the first index in the first matrix.

The column corresponding to the first index may be a column corresponding to a second index that has a third relationship with a value of the first index. For example, the third relationship is that the value of the first index is equal to a value of the second index, or the value of the first index plus a fixed value is equal to the value of the second index.

The first location information may indicate an index (referred to as a third index herein for ease of differentiation) of a column number for performing dimension reduction on the first matrix. The first communication apparatus determines to delete a column corresponding to the third index in the first matrix, or the first communication apparatus determines to delete the column corresponding to the third index and a row corresponding to the third index in the first matrix. The row corresponding to the third index may be a row corresponding to a fourth index that has a fourth relationship with a value of the third index. For example, the fourth relationship is that the value of the third index is equal to a value of the fourth index, or the value of the third index plus a fixed value is equal to the value of the fourth index.

For another example, the first location information may indicate a row number of at least one row and/or a column number of at least one column that are/is reserved in the first matrix; or the first location information may indicate a index of row number of at least one row and/or a index of column number of at least one column that are/is reserved in the first matrix. In this way, the first communication apparatus may determine, based on the at least one row and/or the at least one column that are/is reserved in the first matrix and that are/is indicated by the first location information, at least one row and/or at least one column that need/needs to be deleted from the first matrix.

Manner 2: The first location information may implicitly indicate the location at which dimension reduction is to be performed on the first matrix.

For example, a value of the first location information is the same as a value of the information about the first reference signal, or a first mapping relationship is preconfigured for both the first communication apparatus and a second communication apparatus, and the first mapping relationship is a mapping relationship between different values of the first location information and different values of the information about the first reference signal. Therefore, the first communication apparatus only needs to obtain the value of the information about the first reference signal to correspondingly obtain the value of the first location information, and then can determine the location at which dimension reduction is to be performed on the first matrix. In this case, the value of the information about the first reference signal is equivalent to implicitly indicating the location at which dimension reduction is to be performed on the first matrix. The first mapping relationship may be preconfigured in the first communication apparatus and the second communication apparatus according to a protocol, or may be configured by one of the first communication apparatus and the second communication apparatus for the other one of the first communication apparatus and the second communication apparatus.

For example, an example of the first location information is shown in the following Table 1.

**Table 1**

| Value of the first location information | Quantity of dimension reduction locations (representing a quantity of rows or columns that are to be dimensionally reduced) | Dimension reduction location (represents a specific row or a specific column) |
|---|---|---|
| 000 | 0 | None |
| 100 | 1 | 1 |
| 101 | 1 | 2 |
| 110 | 1 | 3 |
| 111 | 1 | 4 |
| 001 | 2 | 1 and 2 |
| 010 | 2 | 3 and 4 |
| 011 | 2 | 1 and 3 |

As shown in the foregoing Table 1, if the value of the first location information is 000, it indicates that dimension reduction is not to be performed on the first matrix, or the location at which dimension reduction is to be performed on the first matrix is empty. If the value of the first location information is 100, it indicates that a first row in the first matrix is to be deleted, that is, it indicates that a quantity of locations at which dimension reduction is to be performed on the first matrix is 1. If the value of the first location information is 101, it indicates that a second row in the first matrix is to be deleted, that is, it indicates that a quantity of locations at which dimension reduction is to be performed on the first matrix is 1. If the value of the first location information is 110, it indicates that a third row in the first matrix is to be deleted, that is, it indicates that a quantity of locations at which dimension reduction is to be performed on the first matrix is 1. If the value of the first location information is 111, it indicates that a fourth row in the first matrix is to be deleted, that is, it indicates that a quantity of locations at which dimension reduction is to be performed on the first matrix is 1. If the value of the first location information is 001, it indicates that the first row and the second row in the first matrix are to be deleted, that is, it indicates that a quantity of locations at which dimension reduction is to be performed on the first matrix is 2. If the value of the first location information is 010, it indicates that the third row and the fourth row in the first matrix are to be deleted, that is, it indicates that a quantity of locations at which dimension reduction is to be performed on the first matrix is 2. If the value of the first location information is 011, it indicates that the first row and the third row in the first matrix are to be deleted, that is, it indicates that a quantity of locations at which dimension reduction is to be performed on the first matrix is 2.

In an example, the first communication apparatus may be preconfigured with content in Table 1, and the first communication apparatus only needs to obtain a specific value of the first location information in Table 1, so that the first communication apparatus can determine, based on Table 1, a row and/or a column that are/is to be dimensionally reduced from the first matrix and a quantity of dimension reduction locations.

It should be noted that, Table 1 is an example of the first location information, and does not constitute a limitation on the first location information.

In a possible implementation, a specific manner in which the first communication apparatus obtains the information about the first reference signal and the first location information is as follows: The first communication apparatus receives the information about the first reference signal and the first location information from the second communication apparatus.

In this implementation, S501 may specifically include S501a and S501b. In S501a, the second communication apparatus may send the information about the first reference signal to the first communication apparatus, and correspondingly, the first communication apparatus receives the information about the first reference signal. In S501b, the second communication apparatus sends the first location information to the first communication apparatus, and correspondingly, the first communication apparatus receives the first location information from the second communication apparatus.

In S501a, the information about the first reference signal may be preconfigured (for example, may be preconfigured by a protocol) in the second communication apparatus, or may be determined by the second communication apparatus by itself. The second communication apparatus may put the information about the first reference signal in first signaling, and send the first signaling to the first communication apparatus, which is equivalent to sending the information about the first reference signal to the first communication apparatus. The first signaling is, for example, higher layer signaling, for example, radio resource control (radio resource control, RRC) signaling or a media access control (media access control, MAC) control element (control element, CE). Alternatively, the first signaling is, for example, physical layer signaling, for example, downlink control information (downlink control information, DCI). Alternatively, the first signaling is, for example, dedicated signaling.

In S501b, the first location information may be preconfigured (for example, may be preconfigured by a protocol) in the second communication apparatus, or may be determined by the second communication apparatus by itself. A specific manner in which the second communication apparatus determines the first location information by itself is separately described below. Similarly, the second communication apparatus may put the first location information in second signaling, and send the second signaling to the first communication apparatus. This is equivalent to that the second communication apparatus sends the first location information to the first communication apparatus. The first location information may be configured in the second communication apparatus by a protocol, or the first location information may be determined by the second communication apparatus by itself. For specific implementation of the second signaling, refer to the foregoing implementation of the first signaling.

Optionally, the first signaling and the second signaling may be same signaling; or the first signaling and the second signaling are different signaling. When the first signaling and the second signaling are different signaling, the second communication apparatus may send the first signaling and the second signaling in any sequence.

It should be noted that S501a and S501b may be performed in any order. For example, S501a and S501b are performed simultaneously; or S501a is performed before S501b; or S501b is performed before S501a.

In another possible implementation, a specific manner in which the first communication apparatus obtains the information about the first reference signal and the first location information is as follows: The information about the first reference signal and the first location information may be preconfigured (for example, may be preconfigured by a protocol) in the first communication apparatus, or may be determined by the first communication apparatus by itself. In this implementation, the first communication apparatus does not need to receive the first location information and the information about the first reference signal from the second communication apparatus, that is, S501a and S501b are optional steps.

S502: The first communication apparatus sends a second reference signal to the second communication apparatus. The second reference signal is obtained by precoding the first reference signal based on a second matrix, and the second matrix is obtained by performing dimension reduction processing on the first matrix based on the first location information. For an implementation of the second reference signal, for example, refer to the foregoing implementation of the first reference signal. Because the second reference signal is a signal actually to be sent by the first communication apparatus, if the first communication apparatus and the second communication apparatus are used in a 5G communication system, the second reference signal may also be referred to as an equivalent air interface reference signal.

The first communication apparatus may be preconfigured (for example, may be configured by a protocol) with the first matrix, or the first communication apparatus may determine the first matrix by itself. The following describes, by using an example, a manner in which the first communication apparatus determines the first matrix.

For example, the first communication apparatus determines a third matrix and a fourth matrix based on geographical location information and antenna arrangement information of the first communication apparatus, and determines the first matrix based on the third matrix and the fourth matrix. The geographical location information is used to indicate a location of the first communication apparatus. The first communication apparatus may determine the geographical location information by itself, or receive the geographical location information of the first communication apparatus from the second communication apparatus. The antenna arrangement information includes antenna size information of the first communication apparatus and antenna quantity information of the first communication apparatus. The antenna size information is used to indicate an antenna size. The antenna quantity information is used to indicate a quantity of antennas. A quantity of antennas of the first communication apparatus is a total quantity of antennas of the first communication apparatus, and the quantity of antennas may also be referred to as an antenna quantity.

If the antenna of the first communication apparatus is an array antenna, the antenna size information of the first communication apparatus includes an antenna size of the first communication apparatus in a first direction (for example, an X-axis direction) and an antenna size of the first communication apparatus in a second direction (for example, a Y-axis direction). The antenna quantity information of the first communication apparatus specifically includes a quantity of antennas of the first communication apparatus in the first direction (for example, the X-axis direction) and a quantity of antennas of the first communication apparatus in the second direction (for example, the Y-axis direction). For example, FIG. 6 is a diagram of an antenna structure of a first communication apparatus according to an embodiment of this application. As shown in FIG. 6, the first communication apparatus includes a 4*4 antenna array. The antenna size of the first communication apparatus in the X-axis direction may be $L_{Sx}$ in FIG. 6, and the antenna size of the first communication apparatus in the Y-axis direction may be $L_{Sy}$ in FIG. 6.

Optionally, a formula for determining the first matrix by the first communication apparatus based on the third matrix and the fourth matrix is shown in the following formula (13).

$$\mathbf{B}=\mathbf{e}^{-j\Gamma_s}\mathbf{\Phi}_s^{H} \tag{13}$$

**B** represents the first matrix; $\Phi_\mathbf{s}$ represents the third matrix, or may be understood as a plane wave matrix of the first communication apparatus; $\mathbf{\Phi}_s^{H}$ represents a transposed matrix of $\Phi_\mathbf{s}$; and $\Gamma_\mathbf{s}$ represents the fourth matrix, or may be understood as a migration matrix of the first communication apparatus.

Optionally, the first communication apparatus may determine, based on the geographical location information, orientations of the first communication apparatus that are respectively on an X-axis and a Y-axis of a wavenumber matrix, and substitute the antenna sizes of the first communication apparatus that are respectively on the X-axis and the Y-axis and the orientations of the first communication apparatus that are respectively on the X-axis and the Y-axis of the wavenumber matrix into the foregoing formula (9), to obtain the third matrix.

Optionally, the first communication apparatus may substitute the antenna sizes of the first communication apparatus on the X-axis and the Y-axis and the orientations of the first communication apparatus that are respectively on the X-axis and the Y-axis of the wavenumber matrix into the foregoing formula (7), to obtain the fourth matrix.

In an example, after determining the first matrix, the first communication apparatus may determine, based on the first location information, a location at which dimension reduction is to be performed on the first matrix, and perform dimension reduction processing on the first matrix based on the location, to obtain the second matrix.

For example, when the first location information includes a row number of at least one row and/or a column number of at least one column that are/is to be dimensionally reduced from the first matrix, the first communication apparatus deletes the at least one row corresponding to the row number in the first matrix, and/or deletes the at least one column corresponding to the column number in the first matrix, to obtain the second matrix. Alternatively, when the first location information indicates a row number of at least one row and/or a column number of at least one column that are/is reserved in the first matrix, the first communication apparatus may determine, based on the at least one row and/or the at least one column that are/is reserved in the first matrix and that are/is indicated by the first location information, a row number of at least one row and/or a column number of at least one column that need/needs to be deleted from the first matrix, so that the first communication apparatus deletes the at least one row corresponding to the row number in the first matrix, and/or delete at least one column corresponding to the column number in the first matrix, to obtain the second matrix.

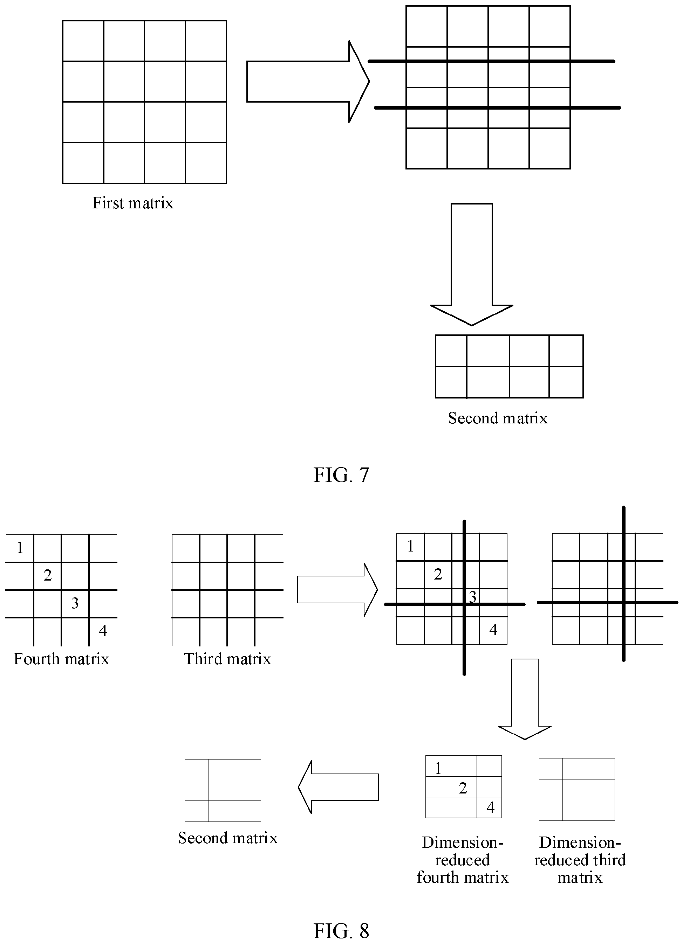

For example, FIG. 7 is a diagram of a process of performing dimension reduction on a first matrix according to an embodiment of this application. As shown in FIG. 7, the first matrix is a 4×4 matrix. The first communication apparatus determines, based on the first location information, to delete a second row and a third row of the first matrix. Therefore, the first communication apparatus deletes the second row and the third row of the first matrix (in FIG. 7, a bold line is used to indicate deletion), to obtain the second matrix. As shown in FIG. 7, the second matrix is a 2×4 matrix.

A dimension of the first matrix is related to a dimension of the third matrix and a dimension of the fourth matrix. Therefore, in another example, the first communication apparatus may determine, based on the first location information, a location at which dimension reduction is to be performed on the first matrix, and determine, based on the location, locations at which dimension reduction is to be performed on the third matrix and the fourth matrix; and then perform dimension reduction on the third matrix and the fourth matrix, and determine the second matrix based on a dimension-reduced third matrix and a dimension-reduced fourth matrix. In this example, that the first communication apparatus performs dimension reduction on the third matrix and the fourth matrix is a specific implementation of performing dimension reduction on the first matrix.

For example, when the fourth matrix is a diagonal matrix, a row in the first matrix is equivalent to a result of a product of a row in the fourth matrix and all columns in the third matrix. Therefore, in this embodiment of this application, the first communication apparatus may directly determine that a location that is indicated by the first location information and at which dimension reduction is to be performed on the first matrix is a location at which dimension reduction is to be performed on the fourth matrix, and determine a location at which dimension reduction is to be performed on the third matrix. A quantity of columns of the dimension-reduced fourth matrix is the same as a quantity of rows of the dimension-reduced third matrix. For example, if it is determined to delete an $i^{th}$ row in the fourth matrix, an $(i+m)^{th}$ column in the third matrix may be correspondingly deleted, so that a quantity of columns of the dimension-reduced fourth matrix is kept the same as a quantity of rows of the dimension-reduced third matrix, where i is a positive integer, and m is an integer.

For example, FIG. 8 is a diagram of a process of performing dimension reduction on a first matrix according to an embodiment of this application. As shown in FIG. 8, the first matrix is a 4×4 matrix. If the first communication apparatus determines, based on the first location information, to delete a third row and a third column in the first matrix, the first communication apparatus correspondingly determines to delete third rows and third columns in the fourth matrix and the third matrix. Further, the first communication apparatus deletes the third rows and the third columns in the fourth matrix and the third matrix (in FIG. 8, a bold line is used to indicate deletion), to obtain the dimension-reduced fourth matrix and the dimension-reduced third matrix. The first communication apparatus substitutes the dimension-reduced fourth matrix and the dimension-reduced third matrix into the foregoing formula (13), to obtain the second matrix. As shown in FIG. 8, the second matrix is a 3×3 matrix.

In this example, the first communication apparatus first performs dimension reduction on the third matrix and the fourth matrix, and then determines the second matrix. Because dimensions of the third matrix and the fourth matrix are reduced, a calculation amount for determining the second matrix by the first communication apparatus can be reduced.

In an example, a quantity of rows of the second matrix is less than the quantity of antennas of the first communication apparatus. In this way, it may be ensured that a dimension of the second reference signal is less than the quantity of antennas of the first communication apparatus, that is, it is ensured that a quantity of resources for sending the second reference signal is less than the quantity of antennas of the first communication apparatus.

After obtaining the information about the first reference signal, the first communication apparatus may determine the first reference signal. For example, the information about the first reference signal is information about a number of the first reference signal. The first communication apparatus may be preconfigured (for example, may be preconfigured by a protocol or preconfigured by the second communication apparatus) with a plurality of reference signals and a number corresponding to each of the plurality of reference signals. The first communication apparatus may use, as the first reference signal, a reference signal in the numbers of the plurality of reference signals that matches the number of the first reference signal. Further, the first communication apparatus may precode the first reference signal based on the second matrix obtained through dimension reduction, to obtain the second reference signal.

In an example, the first communication apparatus multiplies a pseudo-inverse matrix of the second matrix and the first reference signal, to obtain the second reference signal.

In this example, a formula for calculating the second reference signal may be shown in the following formula (14).

$$\mathbf{X}_{aip} = \mathbf{C}^{-1}\mathbf{X}_P \tag{14}$$

$\mathbf{X}_P$ represents the first reference signal, $\mathbf{X}_{aip}$ represents the second reference signal, **C** represents the second matrix, and $\mathbf{C}^{-1}$ represents the pseudo-inverse matrix of the second matrix.

It should be noted that, if the second matrix is a full-rank matrix, an inverse matrix of the second matrix is the pseudo-inverse matrix of the second matrix. If the second matrix is not a full-rank matrix, the first communication apparatus may perform singular value decomposition on the second matrix, and determine the pseudo-inverse matrix of the second matrix based on a result of singular value decomposition on the second matrix.

In an example, an example of a formula for performing singular value decomposition on the second matrix is shown in the following formula (15).

$$\widetilde{C} = \widetilde{U}_C \widetilde{\Lambda}_C \widetilde{V}_C^H \tag{15}$$

**C** represents the second matrix, and **C̃** represents the result of singular value decomposition on the second matrix.

The pseudo-inverse matrix of the second matrix is specifically represented as $\widetilde{V}_c \widetilde{\Lambda}_c^{-1} \widetilde{U}_c^H$. In this case, a formula for calculating the second reference signal is shown in the following (16).

$$X_{aip} = \widetilde{V}_c \widetilde{\Lambda}_c^{-1} \widetilde{U}_c^H X_P \tag{16}$$

S503: The second communication apparatus receives a fourth reference signal from the first communication apparatus.

It should be noted that the fourth reference signal is a signal formed after the second reference signal is transmitted through a channel. The channel is a channel between the first communication apparatus and the second communication apparatus. For example, the channel is a data transmission channel, and is specifically, for example, a physical downlink shared channel (physical downlink shared channel, PDSCH). The fourth reference signal and the second reference signal may be different or may be the same. Whether the second reference signal and the fourth reference signal are the same is affected by the channel (specifically, such as one or more factors in a channel transmission condition, channel fading, and noise interference).

After receiving the fourth reference signal, the second communication apparatus may perform channel estimation based on the fourth reference signal and the first reference signal, to obtain an equivalent result of a channel matrix. The equivalent result of the channel matrix is a channel estimation result. The equivalent result of the channel matrix may also be referred to as an estimation result.

In an example, the second communication apparatus may determine the equivalent result of the channel matrix based on the following formula (17).

$$\widetilde{H} = Y X_P^{-1} \tag{17}$$

*H̃* represents the equivalent result of the channel matrix, **Y** represents the fourth reference signal, $X_p$ represents the first reference signal, and $X_P^{-1}$ represents an inverse matrix of the first reference signal.

For example, the following describes a derivation process of the foregoing formula (17).

For a formula for calculating a channel matrix, refer to the following formula (18).

$$Y = HX + Z \tag{18}$$

**H** represents the channel matrix, Y represents an actually received reference signal, **X** represents an actually sent reference signal, and **Z** represents a noise matrix.

With reference to the foregoing formula (18) and the foregoing formula (2), the following formula (19) may be obtained.

$$Y = APBX_{aip} + Z \tag{19}$$

With reference to the formula (19) and the foregoing formula (2), the formula (19) may be specifically represented as the following formula (20).

$$Y = \Phi_r e^{j\Gamma_r} P e^{-j\Gamma_s} \Phi_s^H X_{aip} + Z \tag{20}$$

It is determined that an equivalent result of **H** is *H̃ = AP*, and therefore, with reference to the foregoing formula (19), the following formula (21) may be obtained.

$$Y=\tilde{H}BX_{aip} \qquad (21)$$

With reference to the formula (21) and the foregoing formula (14), the foregoing formula (17) may be obtained.

Optionally, after obtaining the equivalent result of the channel matrix, the second communication apparatus may recover the channel based on the equivalent result.

For example, if the first reference signal is an uplink reference signal, the equivalent result of the channel matrix determined by the second communication apparatus may be understood as an equivalent result of a channel matrix of an uplink channel. If the first reference signal is a downlink reference signal, the equivalent result of the channel matrix determined by the second communication apparatus may be understood as an equivalent result of a channel matrix of a downlink channel.

Optionally, the second communication apparatus may further determine a precoding matrix based on the equivalent result, and subsequently may use the precoding matrix to precode a signal sent to the first communication apparatus. For example, the second communication apparatus performs eigenvalue decomposition or singular value decomposition on a covariance matrix of the equivalent result, to obtain the precoding matrix.

In the embodiment shown in FIG. 5, the first communication apparatus may perform dimension reduction processing on the first matrix based on the first location information, to obtain the second matrix, and precode the first reference signal based on the second matrix, to determine the second reference signal. In other words, the second reference signal is equivalent to an equivalent reference signal of the first reference signal. Because a dimension of the second reference signal is reduced based on the second matrix, it is helpful to reduce resource overheads for sending the second reference signal. In addition, with reference to the content of the possible implementations in the foregoing formulas (17) to (21), it can be learned that the second reference signal in this embodiment of this application actually includes information about the first matrix. In other words, when performing channel estimation, the second communication apparatus does not need to determine specific content of the first matrix, but actually considers the information about the first matrix. In this way, accuracy of a determined equivalent result of a channel matrix can be ensured. Moreover, when performing channel estimation, the second communication apparatus actually does not need to determine the first matrix. Therefore, this helps reduce a calculation amount of the second communication apparatus, and also helps simplify a channel estimation process. Further, because resource overheads for sending a reference signal are reduced, when the second communication apparatus provides a same resource, compared with a current channel estimation manner, the solution in this embodiment of this application can allow the second communication apparatus to perform channel estimation on more first communication apparatuses. In addition, the solution in this embodiment of this application is applicable to an antenna structure of any type of the first communication apparatus, and is applicable to a relatively wide scope.

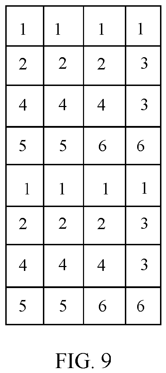

FIG. 9 is a diagram of a structure of a resource occupied by a reference signal according to an embodiment of this application. In FIG. 9, for example, the first communication apparatus is a UE, the second communication apparatus is a base station, each UE sends a reference signal at intervals of four resource elements (resource elements, REs) in frequency domain, and each UE has four antennas. Each rectangular box in FIG. 9 represents one RE. As shown in FIG. 9, a UE 1 occupies four REs to send a reference signal to the base station, and in FIG. 9, rectangular boxes marked with "1" are used to represent the REs occupied by the UE 1; a UE 2 occupies three REs to send a reference signal, and in FIG. 9, rectangular boxes marked with "2" are used to represent the REs occupied by the UE 2; a UE 3 occupies two REs to send a reference signal, and in FIG. 9, rectangular boxes marked with "3" are used to represent the REs occupied by the UE 3; a UE 4 occupies three REs to send a reference signal, and in FIG. 9, rectangular boxes marked with "4" are used to represent the REs occupied by the UE 4; a UE 5 occupies two REs to send a reference signal, and in FIG. 9, rectangular boxes marked with "5" are used to represent the REs occupied by the UE 5; and a UE 6 occupies two REs to send a reference signal, and in FIG. 9, rectangular boxes marked with "6" are used to represent the REs occupied by the UE 6. It can be learned that, in the solution in this embodiment of this application, 16 REs can support six UEs in sending a reference signal, and correspondingly, the base station can perform channel estimation on six UEs. However, in a current channel estimation manner, because each UE has four antennas, one UE needs four REs to send a reference signal. Therefore, in the current channel estimation manner, 16 REs can support only four UEs to send a reference signal, and correspondingly, the base station can perform channel estimation on only four UEs. It can be learned that, in this embodiment of this application, the base station can perform channel estimation on more UEs.

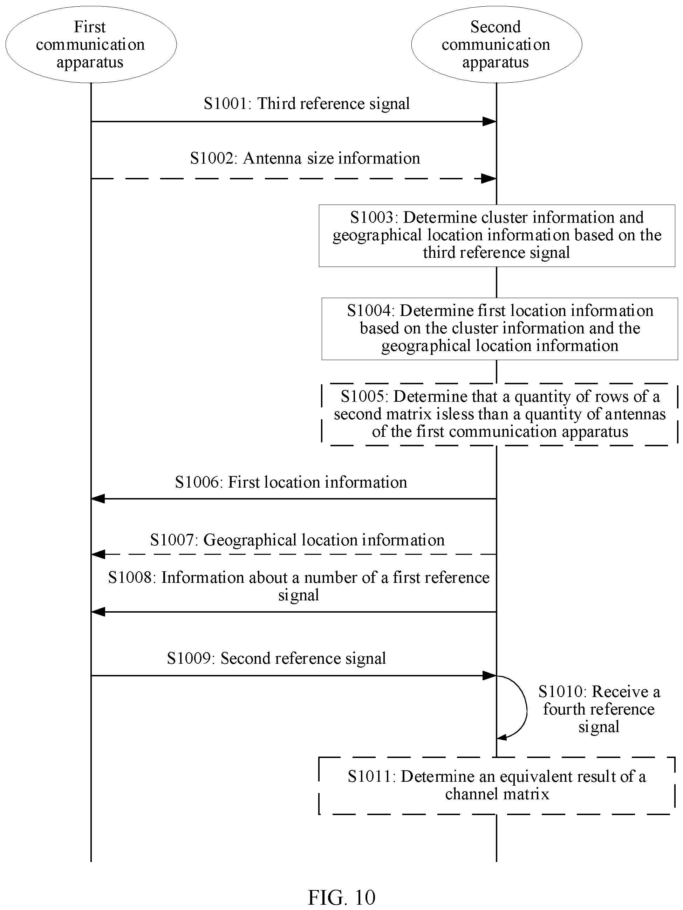

FIG. 10 is a schematic flowchart of a communication method according to an embodiment of this application. In FIG. 10, an example in which information about a first reference signal is information about a number of the first reference signal is used for description. In the embodiment shown in FIG. 10, a manner in which the second communication apparatus determines the first location information in FIG. 5 is specifically described.

S1001: A first communication apparatus sends a third reference signal to the second communication apparatus. Correspondingly, the second communication apparatus receives the third reference signal from the first communication apparatus.

The third reference signal may be an uplink reference signal or a downlink reference signal. The uplink reference signal is, for example, an SRS or a DMRS, and the downlink reference signal is, for example, a CSI-RS. It should be noted that, both the third reference signal and the first reference signal may be uplink reference signals, or may be downlink reference signals.

In an example, the third reference signal is a narrowband reference signal. The narrowband reference signal may be understood as a reference signal sent on a narrowband. For example, the third reference signal is a narrowband SRS.

S 1002: The first communication apparatus sends antenna size information to the second communication apparatus. Correspondingly, the second communication apparatus receives the antenna size information from the first communication apparatus. For a meaning of the antenna size information, refer to the foregoing description.

The second communication apparatus may determine a quantity of antennas of the first communication apparatus based on the antenna size information. For example, the second communication apparatus is preconfigured with a size of each antenna, and the second communication apparatus may determine the quantity of antennas of the first communication apparatus based on the antenna size information.

In another possible implementation, the first communication apparatus may further send antenna quantity information of the first communication apparatus to the second communication apparatus. In this case, the second communication apparatus does not need to determine the quantity of antennas of the first communication apparatus based on the antenna size information of the first communication apparatus.

In another possible implementation, the second communication apparatus may be preconfigured (for example, configured by a protocol) with the antenna quantity information and/or the antenna size information of the first communication apparatus. In this case, the second communication apparatus does not need to receive the antenna size information from the first communication apparatus, that is, step S1002 does not need to be performed. In other words, step S1002 is optional, and is shown by a dashed line in FIG. 10.

S1003: The second communication apparatus determines cluster information and geographical location information based on the third reference signal.

The cluster information is used to indicate a location at which power in a wavenumber matrix (that is, a fifth matrix) of the first communication apparatus is greater than or equal to a first threshold. The location herein may be understood as a location corresponding to an element whose power is greater than or equal to the first threshold in the fifth matrix. The cluster information includes orientation information of a main scatterer and diffusion value information of the main scatterer. The orientation information is used to indicate a pitch angle and an azimuth of the main scatterer. The diffusion value information is used to indicate a diffusion value of the main scatterer, and specifically includes a diffusion value of the azimuth and a diffusion value of the pitch angle. For a meaning of the fifth matrix, refer to the foregoing description. For a meaning of the geographical location information, refer to the foregoing description.

For example, the second communication apparatus may prestore a first correspondence, and the first correspondence includes cluster information and geographical location information that correspond to different reference signals. The second communication apparatus may determine, from the first correspondence, the cluster information and the geographical location information that correspond to the third reference signal.

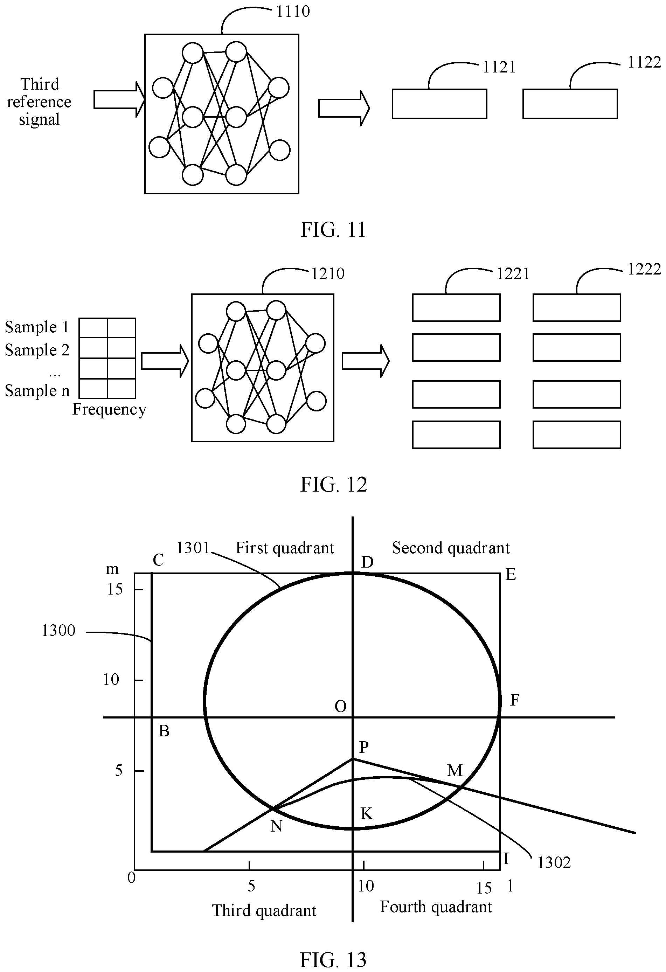

Alternatively, for example, the second communication apparatus performs learning on the third reference signal by using a machine learning model, to obtain the cluster information and the geographical location information. For example, FIG. 11 is a diagram of a process in which the second communication apparatus uses a machine learning model. As shown in FIG. 11, the second communication apparatus inputs the third reference signal into a machine learning model 1110, and the machine learning model may output cluster information 1121 and geographical location information 1122.

The machine learning model is, for example, a neural network model, and is specifically, for example, a convolutional neural network (convolutional neural networks, CNN). The machine learning model may be an unsupervised learning model, a semi-supervised learning model, or a supervised learning model. This is not specifically limited in this embodiment of this application.

The machine learning model may be preconfigured in the second communication apparatus. When the machine learning model is a semi-supervised learning model or a supervised learning model, the machine learning model may alternatively be obtained by the second communication apparatus by training an original machine learning model. The following describes, by using an example, a process of training a machine learning model by the second communication apparatus.

FIG. 12 is a diagram of a process of training a machine learning model according to an embodiment of this application. As shown in FIG. 12, the second communication apparatus may train an original machine learning model 1210 by using a plurality of samples. The plurality of samples include a sample 1 and a sample 2 to a sample n. Each of the plurality of samples includes at least one sample reference signal separately received by the second communication apparatus at at least one frequency.

For example, the second communication apparatus inputs the sample 1 into the original machine learning model 1210, to obtain cluster information 1221 and geographical location information 1222 that are predicted by the original machine learning model 1210. The second communication apparatus adjusts a parameter of the original machine learning model 1210 based on an error between the predicted cluster information 1221 and real cluster information corresponding to the sample 1 and an error between the predicted geographical location information 1222 and real geographical location information corresponding to the sample 1; and inputs the sample 2 into the machine learning model 1210 obtained after the parameter is adjusted, and so on, until the machine learning model 1210 meets a preset condition, to obtain a trained machine learning model (the machine learning model shown in FIG. 11). The preset condition is, for example, the machine learning model 1210 converges, or a quantity of times of training the machine learning model 1210 by the second communication apparatus reaches a preset quantity of times.

Optionally, the sample reference signal is a narrowband reference signal. In this way, in one aspect, a frequency domain resource occupied for sending the reference signal can be reduced, and in another aspect, an amount of processing performed by the second communication apparatus on the narrowband reference signal can be reduced.

S1004: The second communication apparatus determines first location information based on the cluster information and the geographical location information.

As described above, because power distribution of a signal sent by the first communication apparatus has sparsity to some extent, it indicates that the fifth matrix is a sparse matrix. Therefore, in this embodiment of this application, the second communication apparatus may prune the fifth matrix.

Specifically, the second communication apparatus may determine, based on the cluster information and the geographical location information, some or all elements that are less than or equal to the first threshold in the fifth matrix. For ease of description, some or all elements that are less than or equal to the first threshold are referred to as at least one element in the following. A location corresponding to the at least one element is a location indicated by second location information. The second communication apparatus may prune at least one element in the fifth matrix. In this way, a dimension of the fifth matrix may be further reduced while effective information in the fifth matrix is reserved as much as possible. The second communication apparatus may determine the first location information based on the second location information. For a meaning of the first location information, refer to the foregoing description.

For example, the second communication apparatus may determine distribution information of the fifth matrix based on the geographical location information, the quantity of antennas, and the cluster information that are of the first communication apparatus, for example, including the dimension of the fifth matrix, a location of an element whose power is greater than or equal to the first threshold in the fifth matrix, and a location of an element that is greater than or equal to a second threshold in the fifth matrix. The first threshold is greater than the second threshold, and both the first threshold and the second threshold are greater than zero. Further, the second communication apparatus may determine at least one element based on the information about the fifth matrix. It should be noted that, the second communication apparatus may determine the distribution information of the fifth matrix, but does not need to determine a specific value of each element in the fifth matrix.

There are a plurality of manners of pruning the fifth matrix, which are respectively described below.

In a pruning manner 1, the second communication apparatus prunes (or deletes) an element that is zero in the fifth matrix. In other words, a value of each of the at least one element is zero.

For example, the second communication apparatus may determine, based on the foregoing formula (10) and the distribution information of the fifth matrix, an element that is zero in the fifth matrix.

In the pruning manner 1, the second location information is equivalent to specifically indicating a location of at least one element that is zero in the fifth matrix.

FIG. 13 is a diagram of pruning a fifth matrix according to an embodiment of this application. The first communication apparatus determines that elements distributed in a second area other than a first area 1301 in the fifth matrix 1300 are zero, and therefore may determine to delete the elements in the second area of the fifth matrix. It should be noted that, an area may be understood as a result formed by locations corresponding to a plurality of consecutive elements in a matrix.

In the pruning manner 1, the effective information in the fifth matrix can be reserved to a maximum extent.

In a pruning manner 2, the second communication apparatus determines to prune all elements in a quadrant that is less than the second threshold in the fifth matrix. In other words, the at least one element is all the elements in the quadrant less than the second threshold.

For example, the second communication apparatus may divide the fifth matrix into four quadrants. If determining that all elements included in a quadrant are less than the second threshold, the second communication apparatus deletes all the elements in the quadrant. By analogy, the second communication apparatus may delete a quadrant in which power is less than the second threshold in the fifth matrix.

In the pruning manner 2, the second location information is equivalent to specifically indicating all elements in a quadrant that is less than the second threshold in the fifth matrix.

Still refer to the example in FIG. 13. The second communication apparatus obtains four quadrants (specifically including a first quadrant, a second quadrant, a third quadrant, and a fourth quadrant) through division by using an O point as an origin. If the second communication apparatus determines that all elements in the first quadrant and the second quadrant in the fifth matrix are less than the second threshold, the second communication apparatus determines to delete elements in an area shown by CBOD and an area shown by DOFE.

Compared with the pruning manner 1, the pruning manner 2 can be used to delete more elements in the fifth matrix, so that the dimension of the fifth matrix can be reduced to a greater extent, and correspondingly, a dimension of a first matrix can be reduced to a greater extent.

In a pruning manner 3, the second communication apparatus determines to delete all locations that are less than the first threshold in the fifth matrix. In other words, the at least one element is all elements that are less than the first threshold in the fifth matrix.

For example, the second communication apparatus may determine, based on the cluster information, all locations at which power is less than the first threshold in the fifth matrix, and delete all elements whose power is less than the first threshold in the fifth matrix.

In the pruning manner 3, the second location information is equivalent to specifically indicating locations of all elements that are less than the first threshold in the fifth matrix.

Still refer to the example shown in FIG. 13. The second communication apparatus determines to delete elements in an area other than an area shown in a third area 1302 in the fifth matrix.

Optionally, because there may be a specific error in the distribution information that is of the fifth matrix and that is determined by the second communication apparatus, in this embodiment of this application, the second communication apparatus may expand, based on a preset range, a location of an element that is greater than or equal to the first threshold in the fifth matrix, to obtain a reference location. The reference location is equivalent to including the location of the element that is greater than or equal to the first threshold in the fifth matrix, and more locations. The second communication apparatus determines to delete an element at a location other than the reference location in the fifth matrix. In this way, a relatively large quantity of locations in the fifth matrix can be reserved, thereby reducing occurrence of a case that the effective information in the fifth matrix is deleted because the distribution information of the fifth matrix is inaccurate.

In this case, the second location information is equivalent to specifically indicating a location other than the reference location in the fifth matrix. In other words, the at least one element is an element at the location other than the reference location in the fifth matrix.

Still as shown in FIG. 13, the second communication apparatus may expand the third area 1302 based on the preset range, to obtain a fourth area shown by NPM in FIG. 13, and determine to delete the fourth area in the fifth matrix.

Compared with the pruning manner 2, the pruning manner 3 can be used to delete more elements in the fifth matrix, so that the dimension of the fifth matrix can be reduced to a greater extent, that is, the dimension of the first matrix can be reduced to a greater extent.

In any one of the pruning manner 1 to the pruning manner 3, the second communication apparatus not only reduces the dimension of the fifth matrix, but also reserves a location of an element that is greater than or equal to the first threshold in the fifth matrix, which is equivalent to reserving the effective information in the fifth matrix.

The following describes a process in which the second communication apparatus determines the first location information based on the second location information.

For example, the second communication apparatus may determine, based on the second location information, at least one row and/or at least one column that need/needs to be deleted from a composite matrix, and determine the first location information based on the at least one row and/or the at least one column that need/needs to be deleted from the composite matrix.

For example, as shown in the foregoing formula (2), a channel matrix may be represented as a product of a transformation matrix of the second communication apparatus (equivalent to a receiving device), the composite matrix, and a transformation matrix (that is, the first matrix) of the first communication apparatus (equivalent to a sending device). A formula for calculating the composite matrix may be shown in the foregoing formula (11), that is, the composite matrix may be represented as a product of column vectorization of a wavenumber matrix of the second communication apparatus and row vectorization of the wavenumber matrix of the first communication apparatus. In this case, a product of a quantity of rows and a quantity of columns of the fifth matrix is a quantity of columns of the composite matrix, and an element in the fifth matrix is actually a column (or a row) in the composite matrix. Therefore, after determining that at least one element at some locations (that is, locations indicated by the second location information) in the fifth matrix is deleted, the second communication apparatus may correspondingly determine a location that is in the composite matrix and that corresponds to the at least one element deleted from the fifth matrix. Specifically, deleting at least one element in the fifth matrix is equivalent to deleting at least one row or at least one column in the composite matrix.

If the calculation formula shown in the formula (20) needs to be constructed, it is required to ensure that a quantity of columns of the composite matrix is the same as a quantity of rows of the transformation matrix of the first communication apparatus. Therefore, the second communication apparatus may determine, based on a row and/or a column that are/is in the composite matrix and that correspond/corresponds to the at least one element to be deleted from the fifth matrix, a corresponding row and/or a corresponding column that need/needs to be deleted from the first matrix, to determine the first location information.

For example, the second location information indicates that a quantity of columns to be deleted from the composite matrix is the same as a quantity of rows to be deleted from the first matrix, and/or the second location information indicates that a quantity of rows to be deleted from the composite matrix is the same as a quantity of columns to be deleted from the first matrix.

Optionally, the second location information indicates that a column number of a column to be deleted from the composite matrix is the same as a row number of a row to be deleted from the first matrix, and/or the second location information indicates that a row number of a row to be deleted from the composite matrix is the same as a column number of a column to be deleted from the first matrix.

For example, if the second communication apparatus determines that a first column and a second column in the composite matrix need to be deleted, the second communication apparatus determines that a first row and a second row in the first matrix need to be deleted. For another example, if the second communication apparatus determines that a third row in the composite matrix needs to be deleted, the second communication apparatus determines that a third column in the first matrix needs to be deleted. For another example, if the second communication apparatus determines that a first row and a second column in the composite matrix need to be deleted, the second communication apparatus determines that a first column and a second row in the first matrix need to be deleted.

It should be noted that S1001 and S1003 and S1004 are a manner of determining the first location information by the second communication apparatus according to this embodiment of this application. Certainly, the second communication apparatus may determine the first location information in a plurality of manners. This is not specifically limited in this embodiment of this application. When the second communication apparatus does not need to determine the first location information, or does not determine the first location information in this manner, S1001 and S1003 and S1004 are optional steps.

S1005: The second communication apparatus determines that a quantity of rows of a second matrix is less than the quantity of antennas of the first communication apparatus.

As described above, the second communication apparatus may determine the dimension of the first matrix, and therefore can determine a dimension of the second matrix based on the first location information. Further, the second communication apparatus may determine whether the quantity of rows of the second matrix is less than the quantity of antennas of the first communication apparatus.

Optionally, the second communication apparatus may further determine whether the quantity of rows of the second matrix is less than the quantity of antennas of the first communication apparatus.

In a possible implementation, if the first location information indicates that a location at which dimension reduction is to be performed on the first matrix is a row location, the second communication apparatus may determine that the quantity of rows of the second matrix is less than the quantity of antennas of the first communication apparatus. If the first location information indicates that a location at which dimension reduction is to be performed on the first matrix is a column location, the second communication apparatus may determine that a quantity of columns of the second matrix is less than the quantity of antennas of the first communication apparatus. If the first location information indicates that locations at which dimension reduction is to be performed on the first matrix are a row location and a column location, the second communication apparatus may determine that the quantity of rows of the second matrix is less than the quantity of antennas of the first communication apparatus, and/or determine that the quantity of columns of the second matrix is less than the quantity of antennas of the first communication apparatus.

In the embodiment shown in FIG. 7, an example in which the second communication apparatus determines that the quantity of rows of the second matrix is less than the quantity of antennas of the first communication apparatus is used for description. In this assumption, if the second communication apparatus determines that the quantity of rows of the second matrix is less than the quantity of antennas of the first communication apparatus, S1006 may be performed, to be specific, the second communication apparatus sends the first location information to the first communication apparatus. If the second communication apparatus determines that the quantity of rows of the second matrix is less than the quantity of antennas of the first communication apparatus, the second communication apparatus may still perform step S1006; or the first communication apparatus may directly send the first reference signal to the second communication apparatus. Correspondingly, the second communication apparatus receives the reference signal from the first communication apparatus, and performs channel estimation based on the received reference signal.

In S 1005, the second communication apparatus may determine that the quantity of rows and/or the quantity of columns of the second matrix obtained through dimension reduction are/is less than the quantity of antennas of the first communication apparatus, to ensure that the quantity of rows and/or the quantity of columns of the second matrix are/is less than the quantity of antennas of the first communication apparatus. Therefore, it can be ensured that a quantity of resources for sending the reference signal is less than the quantity of antennas of the first communication apparatus, thereby reducing resource overheads for sending the reference signal.

Alternatively, the second communication apparatus may not perform S1005. In other words, S 1005 is an optional step, and is shown by a dashed line in FIG. 10.

S 1006: The second communication apparatus sends the first location information to the first communication apparatus. Correspondingly, the first communication apparatus receives the first location information from the second communication apparatus. For a meaning of the first location information, refer to the content described above.

In an example, the second communication apparatus may put the first location information in second signaling, and send first signaling to the first communication apparatus. For a specific implementation of the second signaling, refer to the content described above.

S1007: The second communication apparatus sends the geographical location information to the first communication apparatus. Correspondingly, the first communication apparatus receives the geographical location information from the second communication apparatus. For a meaning of the geographical location information, refer to the content described above.

In an example, the second communication apparatus may put the geographical location information in third signaling, and send the third signaling to the first communication apparatus. For an implementation of the third signaling, refer to content in the foregoing implementation of the first signaling.

Optionally, the third signaling and the second signaling may be different signaling, or may be same signaling.

It should be noted that S1006 and S1007 may be performed in any order. This is not limited in this embodiment of this application.

In another possible implementation, when the first communication apparatus determines the geographical location information by itself, step S1007 does not need to be performed. In other words, S 1007 is an optional step, and is shown by a dashed line in FIG. 10.

S1008: The second communication apparatus sends information about a number of the first reference signal to the first communication apparatus. Correspondingly, the first communication apparatus receives the information about the number of the first reference signal from the second communication apparatus. For a meaning of the information about the number of the first reference signal and a manner of sending the number of the first reference signal by the second communication apparatus, refer to the content described above.

S1009: The first communication apparatus sends a second reference signal to the second communication apparatus.

For content of the second reference signal, a manner of obtaining the second reference signal by the first communication apparatus, and content of sending the second reference signal by the first communication apparatus, refer to the content described above. Details are not described herein again.

The following describes, by using an example, a process in which the first communication apparatus obtains the second matrix.

For example, the wavenumber matrix (that is, the first matrix) of the first communication apparatus may be represented as $H_{a,Sx} \in C^{[2M_y, 2M_x]}$, where a column coordinate of the wavenumber matrix is $u_x \in [-M_x, -M_x+1, ..., M_x-1]$, and a row coordinate is $u_y \in [-M_y, -M_y + 1, ..., M_y - 1]$. A row index of the first matrix is $u_y + M_y + 1$, and a column index is $u_x + M_x + 1$. Correspondingly, a dimension of the composite matrix is specifically $C^{[2L_y \times 2L_x, 2M_y \times 2M_x]}$. In this case, the dimension of the first matrix is $C^{[2M_y \times 2M_x, n]}$, where $n$ represents a quantity of transmit antennas of the first communication apparatus.

Assuming that $M_x=M_y=2$, the second communication apparatus determines to delete an element in a second row and a second column and an element in a fourth row and a third column in the fifth matrix. In addition, the elements in the second row and the second column and the fourth row and the third column in the fifth matrix correspond to a sixth column and a twelfth column in a composite matrix P. Correspondingly, the second communication apparatus determines to delete a sixth row and a twelfth row in the first matrix. Therefore, the second communication apparatus may generate the first location information, and the first location may specifically indicate to delete the sixth row and the twelfth row in the first matrix. Further, the second communication apparatus may send the first location information to the first communication apparatus.

Correspondingly, the first communication apparatus determines, based on the first location information, to delete a sixth row and a twelfth row in a fourth matrix and delete a sixth column and a twelfth column in the third matrix, and therefore, deletes the sixth row and the twelfth row in the fourth matrix and delete the sixth column and the twelfth column in the third matrix, and obtains the second matrix based on the dimension-reduced fourth matrix and the dimension-reduced third matrix. The dimension of the second matrix is specifically $C^{[2M_y \times 2M_x-2,n]}$.

S1010: The second communication apparatus receives a fourth reference signal from the first communication apparatus.

For a meaning of the fourth reference signal, refer to the foregoing description. Details are not listed herein again.

S1011: The second communication apparatus determines an equivalent result of a channel matrix.

For a manner in which the second communication apparatus determines the equivalent result of the channel matrix, refer to the content described above.

The second communication apparatus may not perform step S1011. In other words, S1011 is an optional step, and is shown by a dashed line in FIG. 10.

In the embodiment shown in FIG. 10, the second communication apparatus may determine the cluster information, determine the fifth matrix of the first communication apparatus based on the cluster information, the quantity of antennas of the first communication apparatus, and the like, delete a part (equivalent to a sparse part) with relatively low power in the fifth matrix, and further determine a location that is in the first matrix and that corresponds to the sparse part in the fifth matrix, to determine the second location information. This provides a manner of determining the second location information by the second communication apparatus. In addition, in this embodiment, because the second communication apparatus deletes the sparse part, the effective information in the fifth matrix can be reserved to a maximum extent, and correspondingly, effective information in the first matrix is reserved. Dimension reduction is performed on the first matrix in such a way, so that accuracy of the equivalent result of the channel matrix can be ensured to some extent while resource overheads for sending a reference signal are reduced. In addition, in the embodiment shown in FIG. 10, the second communication apparatus determines the first location information based on an actual status of the first communication apparatus. In one aspect, a processing amount of the first communication apparatus is reduced, and in another aspect, the second communication apparatus may determine the first location information that better meets a requirement. This helps reserve more effective information in the second reference signal, thereby improving accuracy of channel estimation.

To verify technical effects of the solution in this embodiment of this application, the following uses different antenna structures (specifically including the following first antenna structure, second antenna structure, and third antenna structure) of the first communication apparatus as examples to perform analog simulation on a process of communication between the first communication apparatus and the second communication apparatus, to obtain the following in different antenna structures of the first communication apparatus: reduced resource overheads for sending the second reference signal in the solution in this embodiment of this application, and an equivalent result of a channel matrix determined in the solution in this embodiment of this application.

In the first antenna structure, the first communication apparatus includes a $4\times4$ antenna array, and any two antennas are arranged with an equal spacing, where the spacing between any two antennas is, for example, $0.5\lambda$. For the first communication apparatus of the first antenna structure, refer to the foregoing diagram shown in FIG. 6.

For example, analog parameters used in the first antenna structure are specifically shown in Table 2.

**Table 2**

| Parameter item of an analog parameter | Value |
|---|---|
| Quantity of antennas of the second communication apparatus | 1024 ($32\times32$) |
| Quantity of antennas of the first communication apparatus | 16 ($4\times4$) |
| Carrier frequency | 10 gigahertz (GHz) |
| Aperture of the second communication apparatus | $0.0600\times0.0600$ |
| Aperture of the first communication apparatus | $0.4797\times0.4797$ |
| Absolute resolution that is of an antenna of the second communication apparatus and that is separately on an X-axis and a Y-axis | (16, 16) |
| Absolute resolution that is of an antenna of the first communication apparatus and that is separately on an X-axis and a Y-axis | (2, 2) |

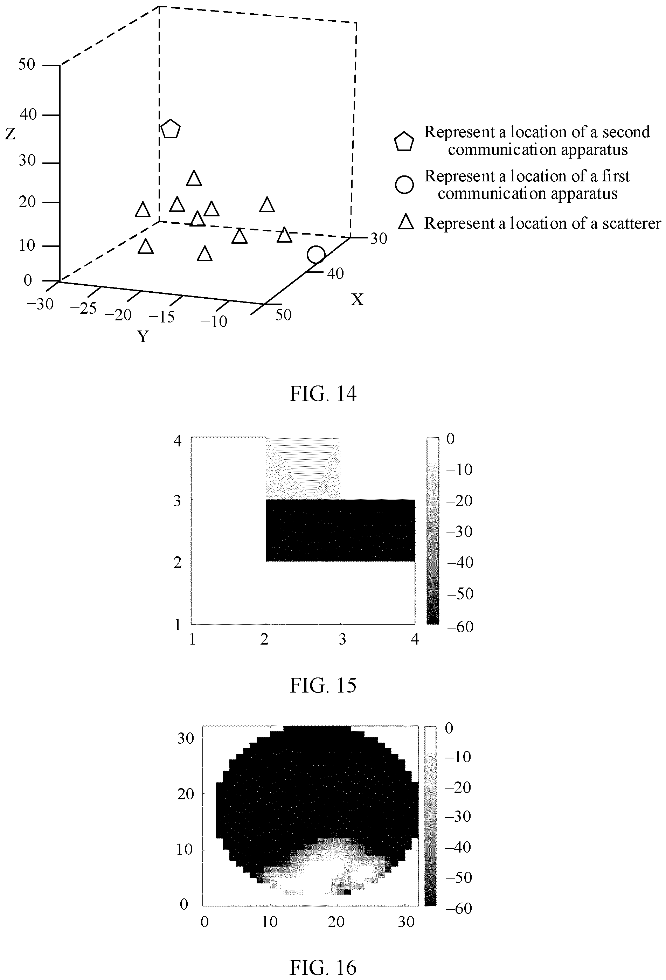

Locations that are of the first communication apparatus, the second communication apparatus, and a scatterer and that are determined based on the analog parameters in Table 2 are specifically shown in FIG. 14. As shown in FIG. 14, it can be learned that locations of the scatterer are relatively distributed together in space.

Based on the analog parameters in Table 2, a determined wavenumber matrix (that is, the fifth matrix) of the first communication apparatus is shown in FIG. 15, and a determined wavenumber matrix of the second communication apparatus is shown in FIG. 16. It can be learned from FIG. 16 that, the wavenumber matrix of the second communication apparatus can reflect distribution of power that is of a received signal sent by the first communication apparatus and that is in different directions.

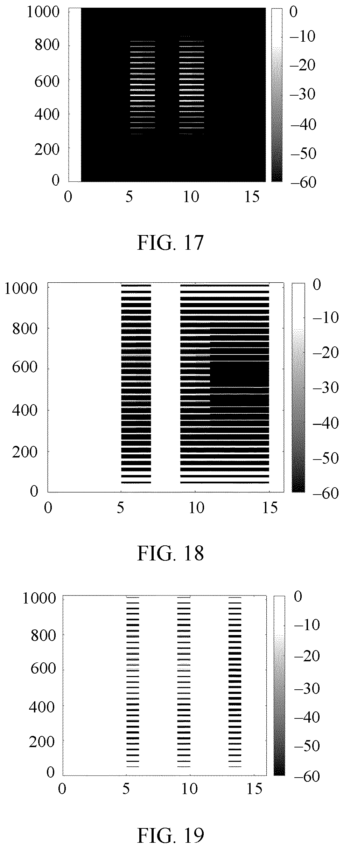

Based on the analog parameters in Table 2, it may be further determined that a dimension of a composite matrix before pruning is specifically [1024, 16], where 1024 represents a quantity of rows of the composite matrix, and 16 represents a quantity of columns of the composite matrix. FIG. 17 is a diagram of a composite matrix before pruning.

After the foregoing pruning manner 1 is used to prune the composite matrix, a dimension of an obtained pruned composite matrix is specifically [795, 11]. FIG. 18 is a diagram of the pruned composite matrix. Compared with the composite matrix before pruning shown in FIG. 17, the pruned composite matrix shown in FIG. 18 has a smaller dimension. In addition, the dimension of the composite matrix may be reduced by 31.25% in the pruning manner 1, compared with that in a case in which no pruning is performed. Correspondingly, resource overheads required for sending a reference signal may also be reduced by 31.25%. In addition, a normalized mean square error (normalized mean squared error, NMSE) between an equivalent result of a channel matrix determined in the pruning manner 1 and a channel matrix determined in the case in which no pruning is performed is $6.4181\times10^{-13}$.

After the foregoing pruning manner 2 is used to prune the composite matrix, a dimension of an obtained pruned composite matrix is specifically [382, 7]. FIG. 19 is a diagram of the pruned composite matrix. Compared with the composite matrix before pruning shown in FIG. 17, the pruned composite matrix shown in FIG. 19 has a smaller dimension. In addition, the dimension of the composite matrix may be reduced by 56.25% in the pruning manner 2, compared with that in a case in which no pruning is performed. Correspondingly, resource overheads required for sending a reference signal may also be reduced by 56.25%. In addition, an NMSE between an equivalent result of a channel matrix determined in the pruning manner 2 and a channel matrix determined in the case in which no pruning is performed is $7.2869 \times 10^{-13}$.

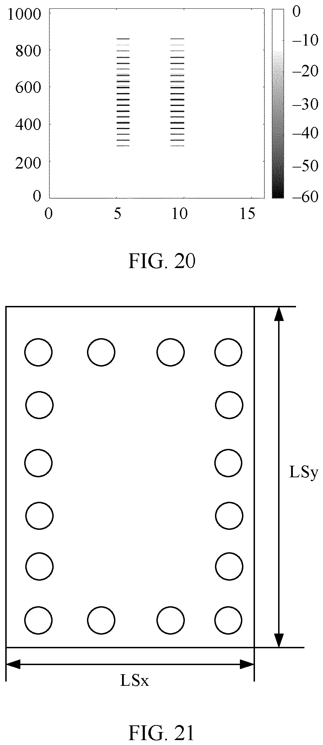

After the foregoing pruning manner 3 is used to prune the composite matrix, a dimension of an obtained pruned composite matrix is specifically [207, 5]. FIG. 20 is a diagram of the pruned composite matrix. Compared with the composite matrix before pruning shown in FIG. 17, the pruned composite matrix shown in FIG. 20 has a smaller dimension. In addition, the dimension of the composite matrix may be reduced by 68.75% in the pruning manner 3, compared with that in a case in which no pruning is performed. Correspondingly, resource overheads required for sending a reference signal may also be reduced by 68.75%. In addition, an NMSE between an equivalent result of a channel matrix determined in the pruning manner and a channel matrix determined in the case in which no pruning is performed is $8.2332 \times 10^{-9}$.

It can be learned that, when an antenna structure of the first communication apparatus is the first antenna structure, the three pruning manners provided in this embodiment of this application all can be used to reduce resource overheads for sending a reference signal, and NMSEs of equivalent results of channel matrices determined in the three pruning manners all are relatively small.

In the second antenna structure, the first communication apparatus includes a (4, 6) antenna. To be specific, four antennas are distributed in an X-axis direction, six antennas are distributed in a Y-axis direction, and a spacing between any two antennas is not fixed. FIG. 21 is a diagram of an antenna structure of a first communication apparatus according to an embodiment of this application.

For example, analog parameters used in the second antenna structure are specifically shown in Table 3.

**Table 3**

| Parameter item of an analog parameter | Value |
|---|---|
| Quantity of antennas of the second communication apparatus | 1024 ($32 \times 32$) |
| Quantity of antennas of the first communication apparatus | 16 (4, 6) |
| Carrier frequency | 10 GHz |
| Aperture of the second communication apparatus | $0.0899 \times 0.0899$ |
| Aperture of the first communication apparatus | $0.4797 \times 0.4797$ |
| Absolute resolution that is of an antenna of the second communication apparatus and that is separately on an X-axis and a Y-axis | (3, 2) |
| Absolute resolution that is of an antenna of the first communication apparatus and that is separately on an X-axis and a Y-axis | (16, 16) |

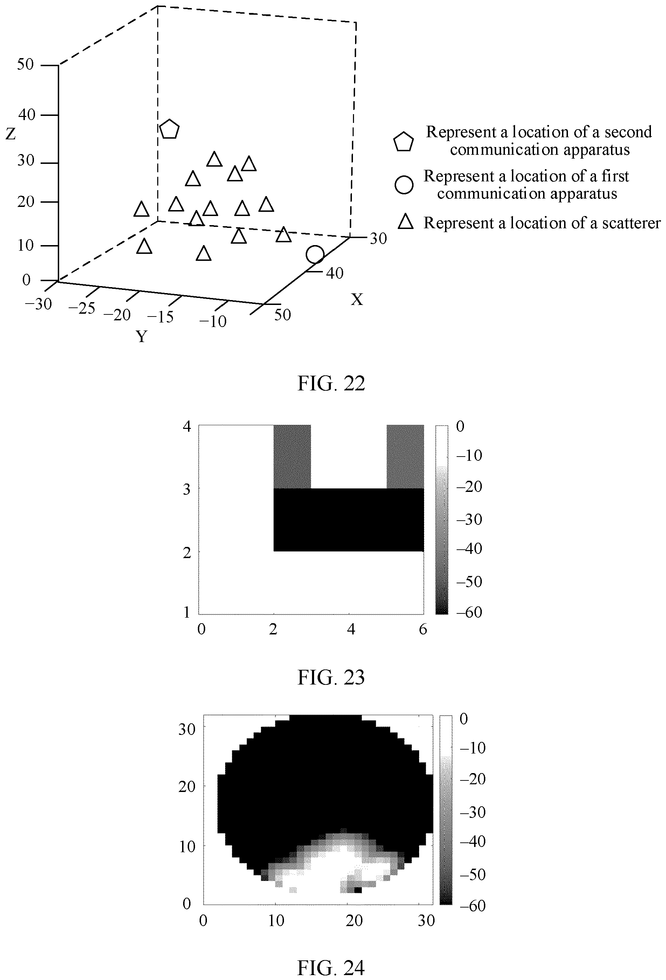

Locations that are of the first communication apparatus, the second communication apparatus, and a scatterer and that are determined based on the analog parameters in Table 3 are specifically shown in FIG. 22. As shown in FIG. 22, it can be learned that locations of the scatterer are relatively distributed together in space.

Based on the analog parameters in Table 3, a determined wavenumber matrix (that is, the fifth matrix) of the first communication apparatus is shown in FIG. 23, and a determined wavenumber matrix of the second communication apparatus is shown in FIG. 24. Because absolute resolution that is of the first communication apparatus in the X-axis direction in FIG. 23 changes compared with absolute resolution that is of the first communication apparatus in the X-axis direction in FIG. 15, the fifth matrix shown in FIG. 23 has two more columns in the X-axis direction compared with the fifth matrix shown in FIG. 15. It can be learned from FIG. 24 that, the wavenumber matrix of the second communication apparatus can reflect distribution of power that is of a received signal sent by the first communication apparatus and that is in different directions.

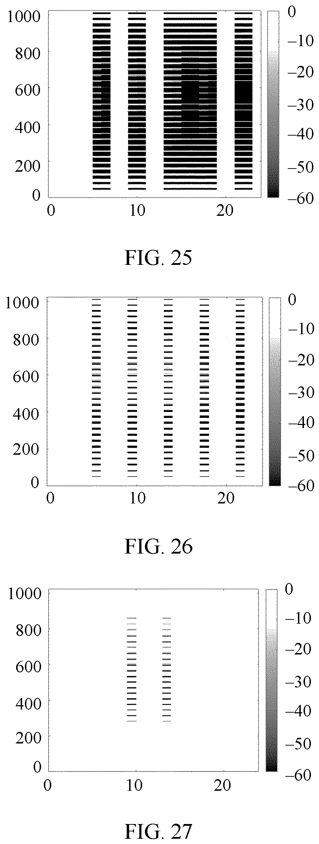

Based on the analog parameters in Table 3, it may be further determined that a dimension of a composite matrix before pruning is specifically [1024, 16]. FIG. 25 is a diagram of a composite matrix before pruning.

After the foregoing pruning manner 2 is used to prune the composite matrix, a dimension of an obtained pruned composite matrix is specifically [382, 11]. FIG. 26 is a diagram of the pruned composite matrix. Compared with the composite matrix before pruning shown in FIG. 25, the pruned composite matrix shown in FIG. 26 has a smaller dimension. The dimension of the composite matrix is reduced by 31.25% in the pruning manner 2, compared with that in a case in which no pruning is performed. Correspondingly, resource overheads for sending a reference signal may also be reduced by 31.25%. In addition, an NMSE between an equivalent result of a channel matrix determined in the pruning manner 1 and a channel matrix determined in the case in which no pruning is performed is $1.399\times10^{-14}$.

After the foregoing pruning manner 3 is used to prune the composite matrix, a dimension of an obtained pruned composite matrix is specifically [250, 7]. FIG. 27 is a diagram of the pruned composite matrix. The dimension of the composite matrix may be reduced by 56.25% in the pruning manner 3, compared with that in a case in which no pruning is performed. Correspondingly, resource overheads that may be used to send a reference signal may also be reduced by 56.25%. In addition, an NMSE between an equivalent result of a channel matrix determined in the pruning manner 3 and a channel matrix determined in the case in which no pruning is performed is $2.4285\times10^{-5}$.

It can be learned that, when an antenna structure manner of the first communication apparatus is the second antenna structure, both the second pruning manner and the third pruning manner provided in this embodiment of this application can be used to reduce resource overheads for sending a reference signal, and NMSEs of equivalent results of channel matrices determined in the three pruning manners all are relatively small.

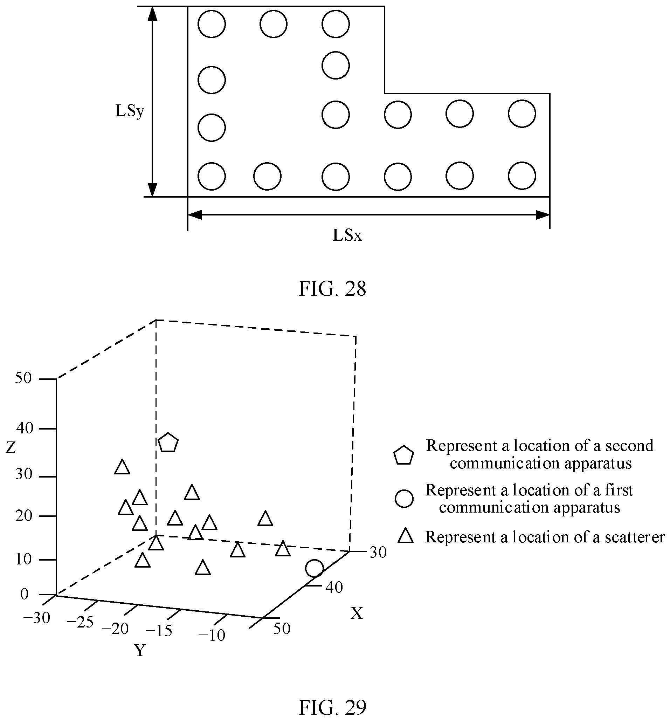

In the third antenna structure, the first communication apparatus includes a (6, 4) antenna. To be specific, six antennas are distributed in an X-axis direction, four antennas are distributed in a Y-axis direction, and spacings between any two antennas are unequal. FIG. 28 is a diagram of an antenna structure of a first communication apparatus according to an embodiment of this application.

For example, analog parameters used in the third antenna structure manner are specifically shown in Table 4.

### Table 4

| Parameter item of an analog parameter | Value |
|---|---|
| Quantity of antennas of the second communication apparatus | 1024 (32$\times$32) |
| Quantity of antennas of the first communication apparatus | 16 (6, 4) |
| Carrier frequency | 10 GHz |
| Aperture of the second communication apparatus | 0.0600$\times$0.0600 |
| Aperture of the first communication apparatus | 0.4797$\times$0.4797 |
| Absolute resolution that is of an antenna of the second communication apparatus and that is separately on an X-axis and a Y-axis | (2, 3) |
| Absolute resolution that is of an antenna of the first communication apparatus and that is separately on an X-axis and a Y-axis | (16, 16) |

Locations that are of the first communication apparatus, the second communication apparatus, and a scatterer and that are determined based on the analog parameters in Table 4 are specifically shown in FIG. 29. As shown in FIG. 29, it can be learned that locations of the scatterer are relatively distributed together in space.

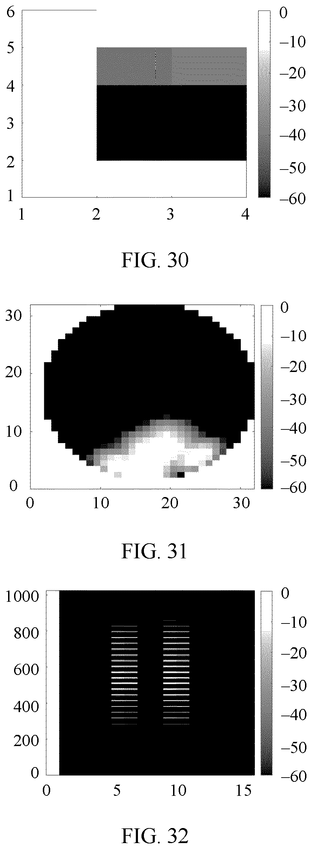

Based on the analog parameters in Table 4, a determined wavenumber matrix (that is, the fifth matrix) of the first communication apparatus is shown in FIG. 30, and a determined wavenumber matrix of the second communication apparatus is shown in FIG. 31. Because absolute resolution that is of the first communication apparatus in the Y-axis direction in FIG. 30 changes compared with absolute resolution that is of the first communication apparatus in the Y-axis direction in FIG. 15, the wavenumber matrix shown in FIG. 30 has two more columns in the Y-axis direction compared with the wavenumber matrix of the first communication apparatus shown in FIG. 15. In addition, it can be learned from FIG. 31 that, the wavenumber matrix of the second communication apparatus can reflect distribution of power that is of a received signal sent by the first communication apparatus and that is in different directions.

Based on the analog parameters in Table 4, it may be further determined that a dimension of a composite matrix before pruning is specifically [1024, 16]. FIG. 32 is a diagram of a composite matrix before pruning.

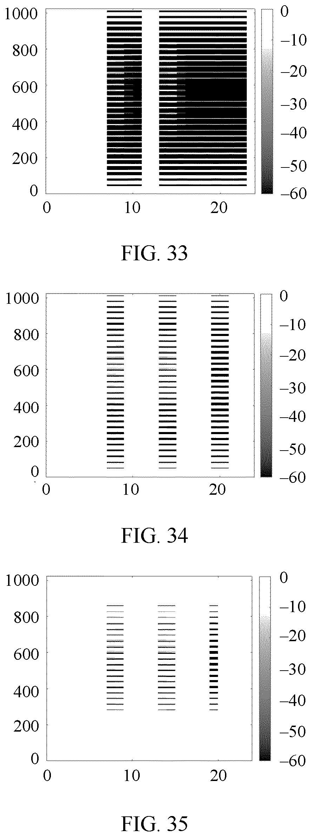

After the foregoing pruning manner 1 is used to prune the composite matrix, a dimension of an obtained pruned composite matrix is specifically [795, 16]. FIG. 33 is a diagram of the pruned composite matrix. Compared with the composite matrix before pruning shown in FIG. 32, the pruned composite matrix shown in FIG. 33 has a smaller dimension. The dimension of the composite matrix may be reduced by 31.25% in the pruning manner 1, compared with that in a case in which no pruning is performed. Correspondingly, resource overheads for sending a reference signal may also be reduced by 31.25%. In addition, an NMSE between an equivalent result of a channel matrix determined in the pruning manner 1 and a channel matrix determined in the case in which no pruning is performed is 0.

After the foregoing pruning manner 2 is used to prune the composite matrix, a dimension of an obtained pruned composite matrix is specifically [382, 10]. FIG. 34 is a diagram of the pruned composite matrix. Compared with the composite matrix before pruning shown in FIG. 32, the pruned composite matrix shown in FIG. 34 has a smaller dimension. The dimension of the composite matrix may be reduced by 37.5% in the pruning manner 2, compared with that in a case in which no pruning is performed. Correspondingly, resource overheads for sending a reference signal may also be reduced by 37.5%. In addition, an NMSE between an equivalent result of a channel matrix determined in the pruning manner 2 and a channel matrix determined in the case in which no pruning is performed is $1.8621 \times 10^{-13}$.

After the foregoing pruning manner 3 is used to prune the composite matrix, a dimension of an obtained pruned composite matrix is specifically [250, 7]. FIG. 35 is a diagram of the pruned composite matrix. The dimension of the composite matrix may be reduced by 56.25% in the pruning manner 3, compared with that in a case in which no pruning is performed. Correspondingly, resource overheads for sending a reference signal may also be reduced by 56.25%. In addition, an NMSE between an estimation result of a channel matrix determined in the pruning manner 3 and a channel matrix determined in the case in which no pruning is performed is $9.1809 \times 10^{-9}$.

It can be learned that, when an antenna structure of the first communication apparatus is the third antenna structure, the three pruning manners provided in this embodiment of this application all can be used to reduce resource overheads for sending a reference signal, and NMSEs of equivalent results of channel matrices determined in the three pruning manners all are relatively small.

In conclusion, the solution in this embodiment of this application can reduce resource overheads for sending a reference signal, and accuracy of a determined equivalent result of a channel matrix is relatively high.

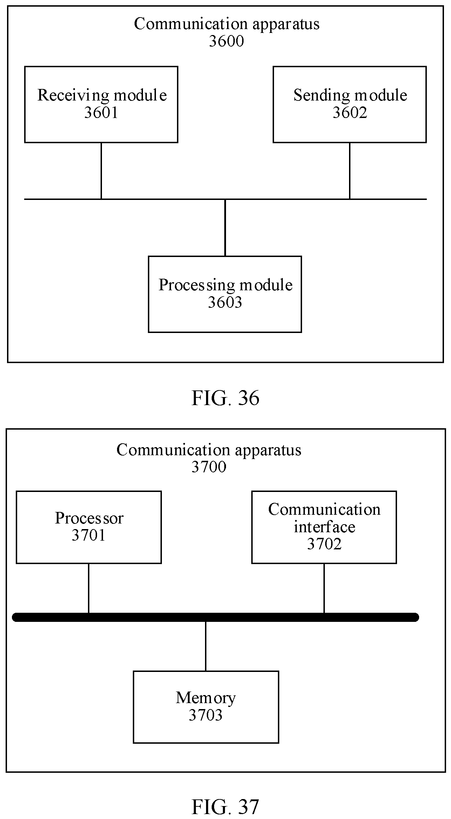

FIG. 36 is a diagram of a structure of a communication apparatus according to an embodiment of this application. As shown in FIG. 36, the communication apparatus 3600 includes a receiving module 3601 and a sending module 3602. The receiving module 3601 and the sending module 3602 may be coupled. Optionally, the communication apparatus further includes a processing module 3603.

In an embodiment, the communication apparatus 3600 may be configured to implement a function of the foregoing first communication apparatus, for example, a function of the first communication apparatus in FIG. 5 or FIG. 9.

For example, the receiving module 3601 may implement step S501, and the sending module 3602 may implement the foregoing step S502. The processing module 3603 may be configured to determine a first matrix.

For another example, the receiving module 3601 may implement steps S1006 and S1008, and the sending module may implement the foregoing step S1009.

In another embodiment, the communication apparatus 3600 may be configured to implement a function of the foregoing second communication apparatus, for example, a function of the second communication apparatus in FIG. 5 or FIG. 9.

For example, the receiving module 3601 may implement the foregoing step S503, and the sending module 3602 may implement steps S501a and S501b. The processing module 3603 may be configured to determine first location information.

For another example, the receiving module 3601 may implement step S1010, and the sending module 3602 may implement the foregoing step S1006. The processing module 3603 may be configured to implement steps S1003 and S1004.

In an example, the processing module 3603 may specifically include a channel estimation module. Optionally, the processing module 3603 may further include a learning module and a signal processing module. The learning module is configured to train the foregoing machine learning model. The channel estimation module is configured to determine an equivalent result of a channel matrix. For specific content of the machine learning model and the equivalent result of the channel matrix, refer to the content described above.

FIG. 37 is a diagram of a structure of a communication apparatus according to an embodiment of this application. As shown in FIG. 37, the communication apparatus 3700 includes a processor 3701 and a communication interface 3702. The processor 3701 and the communication interface 3702 are coupled to each other. It may be understood that the communication interface 3702 may be a transceiver or an input/output interface. The processor 3701 and the communication interface 3702 may implement any one of the foregoing communication methods.

Optionally, the communication apparatus 3700 may further include a memory 3703, configured to store instructions executed by the processor 3701 and/or store input data required by the processor 3701 to run the instructions and/or store data generated after the processor 3701 runs the instructions. The memory 3703 may also be integrated with the memory 3703.

The memory 3703 and the communication interface 3702 are connected through a bus. The bus is represented by a thick line in FIG. 37. A manner of connection between other components is merely an example for description, and is not construed as a limitation. The bus may be classified into an address bus, a data bus, a control bus, and the like. For ease of representation, only one thick line is used to represent the bus in FIG. 37, but this does not mean that there is only one bus or only one type of bus.

In an embodiment, the communication apparatus 3700 may be configured to implement a function of the foregoing first communication apparatus, and may specifically implement the steps implemented by the foregoing first communication apparatus.

In another embodiment, the communication apparatus 3700 may be configured to implement a function of the foregoing second communication apparatus, and may specifically implement the steps implemented by the foregoing second communication apparatus.

Optionally, the processor 3701 is configured to implement a function of the foregoing processing module 3603, and the communication interface 3702 is configured to implement functions of the foregoing receiving module 3601 and sending module 3602.

It may be understood that, the processor 3701 in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or may be any conventional processor.

It should be understood that, the memory 3703 mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically ePROM, EEPROM), or a flash memory. The volatile memory may be a random access memory (random access memory, RAM), and is used as an external cache. Through example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data eate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor 3701 is a general-purpose processor, a DSP, an ASIC, an FPGA or another programmable logic device, a discrete gate or a transistor logic device, or a discrete hardware component, the memory (storage module) may be integrated into the processor.

An embodiment of this application provides a communication system. The communication system includes the foregoing first communication apparatus and second communication apparatus. Correspondingly, the communication system may also implement any one of the foregoing communication methods. For structures of both the first communication apparatus and the second communication apparatus, refer to the structure of the communication apparatus shown in FIG. 36. Alternatively, for structures of both the first communication apparatus and the second communication apparatus, refer to the structure of the communication apparatus shown in FIG. 37.

An embodiment of this application provides a chip system. The chip system includes a processor and an interface. The processor is configured to invoke instructions from the interface and run the instructions, and when the processor executes the instructions, any one of the foregoing communication methods is implemented. The chip system may be configured to implement a function of the foregoing first communication apparatus, or the chip system is configured to implement a function of the foregoing second communication apparatus.

An embodiment of this application provides a computer-readable storage medium. The computer-readable storage medium is configured to store a computer program or instructions, and when the computer program or the instructions are run, any one of the foregoing communication methods is implemented.

An embodiment of this application provides a computer program product including instructions, and when the computer program product runs on a computer, any one of the foregoing communication methods is implemented.

The method steps in embodiments of this application may be implemented by using hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to the processor, so that the processor can read information from the storage medium and can write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, a network device, a user equipment, or another programmable apparatus. The computer programs or the instructions may be stored in a computer-readable storage medium, or may be transmitted from one computer-readable storage medium to another computer-readable storage medium. For example, the computer programs or the instructions may be transmitted from one website, computer, server, or data center to another website, computer, server, or data center in a wired or wireless manner. The computer-readable storage medium may be any available medium accessible by a computer or a data storage device, such as a server or a data center, that integrates one or more available media. The available medium may be a magnetic medium, for example, a floppy disk, a hard disk, or a magnetic tape; may be an optical medium, for example, a digital video disc; or may be a semiconductor medium, for example, a solid state drive. The computer-readable storage medium may be a volatile storage medium or a nonvolatile storage medium, or may include both a volatile storage medium and a nonvolatile storage medium.

In various embodiments of this application, unless otherwise stated or there is a logic conflict, terms and/or descriptions in different embodiments are consistent and may be mutually referenced, and technical features in different embodiments may be combined based on an internal logical relationship between the embodiments, to form a new embodiment.

It may be understood that various numerical numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, applied to a first communication apparatus, wherein the method comprises:

    obtaining first location information and information about a first reference signal, wherein the first location information indicates a location at which dimension reduction is to be performed on a first matrix, and the first matrix is a transformation matrix used to transform a signal sent by the first communication apparatus from a spatial domain to a wavenumber domain; and
    sending a second reference signal, wherein the second reference signal is obtained by precoding the first reference signal based on a second matrix, and the second matrix is obtained by performing dimension reduction processing on the first matrix based on the first location information.

2. The method according to claim 1, wherein the first location information comprises a row number of at least one row and/or a column number of at least one column that are/is to be dimensionally reduced from the first matrix.

3. The method according to claim 1, wherein the first location information comprises an index of a dimension reduction location of the first matrix, and the index is used to indicate a row number of at least one row and/or a column number of at least one column that are/is to be dimensionally reduced from the first matrix.

4. The method according to any one of claims 1 to 3, wherein before the obtaining first location information and information about a first reference signal, the method further comprises:
   sending a third reference signal, wherein the third reference signal is used to determine the first location information.

5. The method according to any one of claims 1 to 4, wherein the method further comprises:
   determining the first matrix based on geographical location information and antenna arrangement information of the first communication apparatus, wherein the geographical location information is used to indicate a geographical location of the first communication apparatus.

6. The method according to claim 5, wherein the determining the first matrix based on geographical location information and antenna arrangement information of the first communication apparatus comprises:

    determining a third matrix and a fourth matrix based on the geographical location information and the antenna arrangement information of the first communication apparatus, wherein the third matrix is used to represent a base of a signal that is sent by the first communication apparatus and that is transformed from the spatial domain to the wavenumber domain, and the fourth matrix is used to represent impact of an antenna of the first communication apparatus on the wavenumber domain; and
    determining the first matrix based on the third matrix and the fourth matrix.

7. The method according to claim 5 or 6, wherein the method further comprises:

receiving the geographical location information.

8.  The method according to any one of claims 1 to 7, wherein the second reference signal is a product result of a pseudo-inverse matrix of the second matrix and the first reference signal.

9.  The method according to any one of claims 1 to 8, wherein the method further comprises:
    sending antenna size information of the first communication apparatus.

10. The method according to any one of claims 1 to 9, wherein a quantity of rows of the second matrix is less than a quantity of antennas of the first communication apparatus, and/or a quantity of columns of the second matrix is less than the quantity of antennas of the first communication apparatus.

11. A communication method, applied to a second communication apparatus, wherein the method comprises:

    sending first location information and information about a first reference signal to a first communication apparatus, wherein the first location information indicates a location at which dimension reduction is to be performed on a first matrix, and the first matrix is a transformation matrix used to transform a signal sent by the first communication apparatus from a spatial domain to a wavenumber domain; and
    receiving a fourth reference signal from the first communication apparatus.

12. The method according to claim 11, wherein the first location information comprises a row number of at least one row and/or a column number of at least one column that are/is to be dimensionally reduced from the first matrix.

13. The method according to claim 11, wherein the first location information comprises an index of a dimension reduction location of the first matrix, and the index is used to indicate a row number of at least one row and/or a column number of at least one column that are/is to be dimensionally reduced from the first matrix.

14. The method according to any one of claims 11 to 13, wherein the method further comprises:
    determining that a quantity of rows of a second matrix is less than a quantity of antennas of the first communication apparatus, and/or a quantity of columns of the second matrix is less than the quantity of antennas of the first communication apparatus, wherein the second matrix is a matrix obtained after dimension reduction processing is performed on the first matrix based on the first location information.

15. The method according to any one of claims 11 to 14, wherein before the sending first location information and information about a first reference signal, the method further comprises:
    receiving a third reference signal from the first communication apparatus, wherein the third reference signal is used to determine the first location.

16. The method according to claim 15, wherein the method further comprises:

    determining cluster information and geographical location information based on the third reference signal, wherein the cluster information is used to indicate a location of an element that is greater than or equal to a first threshold in a fifth matrix, the fifth matrix is used to indicate distribution of power that is of a signal sent by the first communication apparatus and that is in different directions, and the geographical location information is used to indicate a geographical location of the first communication apparatus;
    determining second location information based on the cluster information of the first communication apparatus and the geographical location information, wherein the second location information is used to indicate a location of an element that is less than or equal to the first threshold in the fifth matrix; and
    determining the first location information based on the second location information.

17. The method according to claim 16, wherein the determining cluster information and geographical location information based on the third reference signal comprises:
    processing the third reference signal by using a machine learning model, to obtain the cluster information and the geographical location information.

18. The method according to claim 16 or 17, wherein the method further comprises:
    sending the geographical location information to the first communication apparatus, wherein the geographical location information is used to determine the first matrix.

19. The method according to any one of claims 11 to 18, wherein the method further comprises:
receiving antenna size information from the first communication apparatus.

20. A communication apparatus, comprising:

a receiving module, configured to obtain first location information and information about a first reference signal, wherein the first location information indicates a location at which dimension reduction is to be performed on a first matrix, and the first matrix is a transformation matrix used to transform a signal sent by the communication apparatus from a spatial domain to a wavenumber domain; and
a sending module, configured to send a second reference signal, wherein the second reference signal is obtained by precoding the first reference signal based on a second matrix, and the second matrix is obtained by performing dimension reduction processing on the first matrix based on the first location information.

21. The apparatus according to claim 20, wherein the first location information comprises a row number of at least one row and/or a column number of at least one column that are/is to be dimensionally reduced from the first matrix.

22. The apparatus according to claim 20, wherein the first location information comprises an index of a dimension reduction location of the first matrix, and the index is used to indicate a row number of at least one row and/or a column number of at least one column that are/is to be dimensionally reduced from the first matrix.

23. The apparatus according to any one of claims 20 to 22, wherein the sending module is further configured to:
send a third reference signal before the first location information and the information about the first reference signal are obtained, wherein the third reference signal is used to determine the first location information.

24. The apparatus according to any one of claims 20 to 23, wherein the apparatus further comprises a processing module, and the processing module is further configured to:
determine the first matrix based on geographical location information and antenna arrangement information of the communication apparatus, wherein the geographical location information is used to indicate a geographical location of the communication apparatus.

25. The apparatus according to claim 24, wherein the processing module is further configured to:

determine a third matrix and a fourth matrix based on the geographical location information and the antenna arrangement information of the communication apparatus, wherein the third matrix is used to represent a base of a signal that is sent by the communication apparatus and that is transformed from the spatial domain to the wavenumber domain, and the fourth matrix is used to represent impact of an antenna of the communication apparatus on the wavenumber domain; and
determine the first matrix based on the third matrix and the fourth matrix.

26. The apparatus according to claim 24 or 25, wherein the receiving module is further configured to:
receive the geographical location information.

27. The apparatus according to any one of claims 20 to 26, wherein the second reference signal is a product result of a pseudo-inverse matrix of the second matrix and the first reference signal.

28. The apparatus according to any one of claims 20 to 27, wherein the sending module is further configured to:
send antenna size information of the communication apparatus.

29. The apparatus according to any one of claims 20 to 28, wherein a quantity of rows of the second matrix is less than a quantity of antennas of the communication apparatus, and/or a quantity of columns of the second matrix is less than the quantity of antennas of the communication apparatus.

30. A communication apparatus, comprising:

a sending module, configured to send first location information and information about a first reference signal to a first communication apparatus, wherein the first location information indicates a location at which dimension reduction is to be performed on a first matrix, and the first matrix is a transformation matrix used to transform a signal sent by the first communication apparatus from a spatial domain to a wavenumber domain; and

a receiving module, configured to receive a fourth reference signal from the first communication apparatus.

31. The apparatus according to claim 30, wherein the first location information comprises a row number of at least one row and/or a column number of at least one column that are/is to be dimensionally reduced from the first matrix.

32. The apparatus according to claim 30, wherein the first location information comprises an index of a dimension reduction location of the first matrix, and the index is used to indicate a row number of at least one row and/or a column number of at least one column that are/is to be dimensionally reduced from the first matrix.

33. The apparatus according to any one of claims 30 to 32, wherein the apparatus further comprises a processing module, and the processing module is configured to:
determine that a quantity of rows of the second matrix is greater than a quantity of antennas of the first communication apparatus.

34. The apparatus according to any one of claims 30 to 33, wherein the sending module is further configured to:
receive a third reference signal from the first communication apparatus before sending the first location information and the information about the first reference signal, wherein the third reference signal is used to determine the first location.

35. The apparatus according to claim 34, wherein the apparatus further comprises a processing module, and the processing module is further configured to:

determine cluster information and geographical location information based on the third reference signal, wherein the cluster information is used to indicate a location of an element that is greater than or equal to a first threshold in a fifth matrix, the fifth matrix is used to indicate distribution of power that is of a signal sent by the first communication apparatus and that is in different directions, and the geographical location information is used to indicate a geographical location of the first communication apparatus;
determine second location information based on the cluster information of the first communication apparatus and the geographical location information, wherein the second location information is used to indicate a location of an element that is less than or equal to the first threshold in the fifth matrix; and
determine the first location information based on the second location information.

36. The apparatus according to claim 35, wherein the processing module is configured to:
process the third reference signal by using a machine learning model, to obtain the cluster information and the geographical location information.

37. The apparatus according to claim 35 or 36, wherein the sending module is further configured to:
send the geographical location information to the first communication apparatus, wherein the geographical location information is used to determine the first matrix.

38. The apparatus according to any one of claims 30 to 37, wherein the receiving module is further configured to:
receive antenna size information from the first communication apparatus.

39. A communication system, comprising the apparatus according to any one of claims 20 to 29 and the apparatus according to any one of claims 30 to 38.

40. A communication apparatus, comprising a processor and a communication interface, wherein the communication interface is configured to: receive a signal from an apparatus other than the communication apparatus and transmit the signal to the processor, or send a signal from the processor to an apparatus other than the communication apparatus; and the processor is configured to execute code instructions by using a logic circuit to implement the method according to any one of claims 1 to 10 or the method according to any one of claims 11 to 19.

41. A computer-readable storage medium, wherein the storage medium stores a computer program or instructions; and when the computer program or instructions are executed by a communication apparatus, the method according to any one of claims 1 to 10 or the method according to any one of claims 11 to 19 is implemented.

FIG. 1

FIG. 2

FIG. 3

FIG. 4

First
communication
apparatus

Second
communication
apparatus

S501a: Information about a first reference signal

S501b: First location information

S502: Second reference signal (the second reference signal
is obtained by precoding the first reference signal based on
a second matrix, and the second matrix is obtained by
performing dimension reduction processing on a first matrix
based on the first location information)

S503: Receive
a fourth
reference signal

FIG. 5

LSy

LSx

FIG. 6

First matrix

Second matrix

FIG. 7

Fourth matrix

Third matrix

Second matrix

Dimension-reduced fourth matrix

Dimension-reduced third matrix

FIG. 8

| | | | |
|---|---|---|---|
| 1 | 1 | 1 | 1 |
| 2 | 2 | 2 | 3 |
| 4 | 4 | 4 | 3 |
| 5 | 5 | 6 | 6 |
| 1 | 1 | 1 | 1 |
| 2 | 2 | 2 | 3 |
| 4 | 4 | 4 | 3 |
| 5 | 5 | 6 | 6 |

FIG. 9

First
communication
apparatus

Second
communication
apparatus

S1001: Third reference signal

S1002: Antenna size information

S1003: Determine cluster information and geographical location information based on the third reference signal

S1004: Determine first location information based on the cluster information and the geographical location information

S1005: Determine that a quantity of rows of a second matrix is less than a quantity of antennas of the first communication apparatus

S1006: First location information

S1007: Geographical location information

S1008: Information about a number of a first reference signal

S1009: Second reference signal

S1010: Receive a fourth reference signal

S1011: Determine an equivalent result of a channel matrix

FIG. 10

FIG. 11

FIG. 12

FIG. 13

Represent a location of a second communication apparatus

Represent a location of a first communication apparatus

Represent a location of a scatterer

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

Communication apparatus
3600

Receiving module
3601

Sending module
3602

Processing module
3603

FIG. 36

Communication apparatus
3700

Processor
3701

Communication
interface
3702

Memory
3703

FIG. 37

## INTERNATIONAL SEARCH REPORT

| International application No. |
| --- |
| **PCT/CN2023/096803** |

**A.　CLASSIFICATION OF SUBJECT MATTER**

H04L25/02(2006.01)i;　H04B7/0408(2017.01)i

According to International Patent Classification (IPC) or to both national classification and IPC

**B.　FIELDS SEARCHED**

Minimum documentation searched (classification system followed by classification symbols)

IPC:H04L,H04B,H04W

Documentation searched other than minimum documentation to the extent that such documents are included in the fields searched

Electronic data base consulted during the international search (name of data base and, where practicable, search terms used)

3GPP, CNTXT, ENTXT, DWPI, WPABS, CNKI, IEEE: 变换矩阵, 参考信号, 降维, 矩阵, 列号, 列数, 维, 位置, 行号, 行数, 预编码, 天线, matrix, transform, RS, SRS, DMRS, CSI, dimension, reduction, reduce, column, vector, row, precode, MIMO

**C.　DOCUMENTS CONSIDERED TO BE RELEVANT**

| Category* | Citation of document, with indication, where appropriate, of the relevant passages | Relevant to claim No. |
| --- | --- | --- |
| A | CN 111224698 A (SHANGHAI LANGBO COMMUNICATION TECHNOLOGY CO., LTD.) 02 June 2020 (2020-06-02) description, paragraphs [0110]-[0192] | 1-41 |
| A | US 2019349035 A1 (HUAWEI TECHNOLOGIES CO., LTD.) 14 November 2019 (2019-11-14) entire document | 1-41 |
| A | US 2022070027 A1 (TELEFONAKTIEBOLAGET LM ERICSSON (PUBL)) 03 March 2022 (2022-03-03) entire document | 1-41 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 September 2023** | **15 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/096803**

| Patent document cited in search report | | | Publication date (day/month/year) | Patent family member(s) | | | Publication date (day/month/year) |
|---|---|---|---|---|---|---|---|
| CN | 111224698 | A | 02 June 2020 | WO | 2020103741 | A1 | 28 May 2020 |
| | | | | US | 2021273712 | A1 | 02 September 2021 |
| US | 2019349035 | A1 | 14 November 2019 | US | 10778294 | B2 | 15 September 2020 |
| | | | | EP | 3565133 | A1 | 06 November 2019 |
| | | | | EP | 3565133 | A4 | 13 November 2019 |
| | | | | EP | 3565133 | B1 | 21 April 2021 |
| | | | | KR | 20190104597 | A | 10 September 2019 |
| | | | | KR | 102202364 | B1 | 13 January 2021 |
| | | | | RU | 2720178 | C1 | 27 April 2020 |
| | | | | JP | 2020506609 | A | 27 February 2020 |
| | | | | JP | 6911129 | B2 | 28 July 2021 |
| | | | | WO | 2018137235 | A1 | 02 August 2018 |
| | | | | US | 2020403659 | A1 | 24 December 2020 |
| US | 2022070027 | A1 | 03 March 2022 | EP | 3900481 | A1 | 27 October 2021 |
| | | | | EP | 3900481 | B1 | 26 July 2023 |
| | | | | WO | 2020130895 | A1 | 25 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210739277